# EUROPEAN PATENT SPECIFICATION

(11) **EP 4 307 425 B1**
(45) Date of publication and mention of the grant of the patent: **21.10.2026**
(21) Application number: 22936052.4
(22) Date of filing: 20.05.2022
(51) Int. Cl.: H01M 10/0525, H01M 10/0567, H01M 10/0568, H01M 10/0569

(54) **NON-AQUEOUS ELECTROLYTE AND SECONDARY BATTERY, BATTERY MODULE, BATTERY PACK AND ELECTRICAL DEVICE CONTAINING THE SAME**
WASSERFREIER ELEKTROLYT, SEKUNDÄRBATTERIE DAMIT, BATTERIEMODUL, BATTERIEPACK UND ELEKTRISCHE VORRICHTUNG
ÉLECTROLYTE NON AQUEUX, BATTERIE SECONDAIRE LE COMPRENANT, MODULE DE BATTERIE, BLOC-BATTERIE ET DISPOSITIF ÉLECTRIQUE

(43) Date of publication of application: 17.01.2024
(60) Divisional application: 26204896.0
(73) Proprietor: Contemporary Amperex Technology (Hong Kong) Limited, Central (HK)
(72) Inventor: WU, Zeli, Ningde City, Fujian 352100 (CN); HAN, Changlong, Ningde City, Fujian 352100 (CN)
(74) Representative: Lorenz Seidler Gossel Part. mbB
(86) International application number: PCT/CN2022/094220
(87) International publication number: WO 2023/221120

(56) References cited:
- CN-A- 103 682 443
- CN-A- 110 176 622
- CN-A- 112 310 483
- CN-A- 113 161 612
- CN-A- 113 270 631
- CN-A- 114 142 091
- CN-A- 114 142 091
- JP-A- 2016 048 624
- US-A1- 2021 234 198

## Description

### TECHNICAL FIELD

The present application belongs to the technical field of battery, in particular to a non-aqueous electrolyte and a secondary battery, a battery module, a battery pack and an electrical device containing the same.

### BACKGROUND

In recent years, secondary batteries have been widely used in energy-storage power systems such as hydro, thermal, wind and solar power plants, as well as electric tools, electric bicycles, electric motorcycles, electric vehicles, military equipment, aerospace and many other fields. With the application and promotion of secondary batteries, their comprehensive performance has received more and more attention, for example, secondary batteries need to meet the requirement of high energy density, long cycle life, high safety performance, good multiplier performance and the like at the same time. Non-aqueous electrolyte plays a role of conducting ions between the positive and negative electrodes, and it is one of the key factors affecting the performance of the secondary battery. Therefore, there is an urgent need to provide a non-aqueous electrolyte with good overall performance.

CN 114142091 A discloses a non-aqueous electrolyte system comprising lithium salt additive and silicane additive, which not only solve the problem of corrosion of aluminum foil caused by high-content lithium bisfluorosulfonimide during battery cycle, but also can form a stable solid electrolyte interface (SEI) on the surface of the positive electrode material. Moreover, sulfite additive is introduced by this invention to further reduce the film formation resistance and improv the structure of SEI film. Nevertheless, US 2021/234198 A1 discloses the electrolyte materials comprising lithium fluorosulfonylimide (1.0M ≤ LiFSI ≤ 1.5M), lithium hexafluorophosphate (LiPF6 ≤ 0.5M) and solvents, for example ethylene carbonate (EC ≤30 wt.%), to solve the problem of side reactions on the electrodes caused by conductive salt solubilized in an organic solvent at elevated temperature.

CN 110 176 622 A discloses a lithium secondary battery comprising a lithium salt and sulfamic acid as electrolyte additive at a content of 0.01-5 mass%.

### SUMMARY

An object of the present application is to provide a non-aqueous electrolyte and a secondary battery, a battery module, a battery pack and an electrical device containing the same, which enables the secondary battery to simultaneously have good cycle performance, storage performance, hot box safety performance and kinetic performance..

A first aspect of the present application provides a non-aqueous electrolyte comprising an electrolyte salt, a non-aqueous solvent, a first additive, a second additive and a third additive, wherein the electrolyte salt comprises: lithium bis(fluorosulfonyl)imide, wherein based on the total mass of the non-aqueous electrolyte, lithium bis(fluorosulfonyl)imide is present in a mass content of A1; lithium tetrafluoroborate, wherein based on the total mass of the non-aqueous electrolyte, lithium tetrafluoroborate is present in a mass content of A2; and lithium difluoro(oxalate)borate, wherein based on the total mass of the non-aqueous electrolyte, lithium difluoro(oxalate)borate is present in a mass content of A3; wherein the first additive comprises fluoroethylene carbonate, and wherein based on the total mass of the non-aqueous electrolyte, fluoroethylene carbonate is present in a mass content of B1; wherein the second additive comprises at least one of vinylene carbonate, ethylene sulfate, 1,3-propanesultone, and wherein the second additive is present in a mass content of B2 based on the total mass of the non-aqueous electrolyte; wherein the third additive comprises at least one of sulfamic acid and a salt thereof, and wherein the third additive is present in a mass content of B3 based on the total mass of the non-aqueous electrolyte; and wherein the non-aqueous electrolyte satisfies that: A1 is from 9% to 15%, A1/A2 is from 30 to 1500, A1/B1 is from 3.6 to 15 and A2/A3 is from 0.02 to 30.

The inventors of the present application have found through extensive research that by using lithium tetrafluoroborate, lithium borate bis(fluorosulfonyl)imide and fluoroethylene carbonate in a non-aqueous electrolyte in which lithium bis(fluorosulfonyl)imide is the main lithium salt, and by reasonably adjusting the content A1 of lithium bis(fluorosulfonyl)imide, the content A2 of lithium tetrafluoroborate, the content A3 of lithium difluoro(oxalate)borate and the content B1 of fluoroethylene carbonate to satisfy A1/A2 of 30 to 1500, A1/B1 of3.6 to 15 and A2/A3 of 0.02 to 30, the non-aqueous electrolyte can simultaneously have high thermal stability, high conductivity and wide electrochemical window, and the non-aqueous electrolyte can also passivate the aluminum foil collector and form a dense, stable and low-impedance interfacial film on the surface of the negative active material. Thus the secondary battery using such non-aqueous electrolyte of the present application can have good cycle performance, storage performance, hot box safety performance and kinetic performance at the same time.

In any embodiment of the present application, A1/A2 is from 50 to 250, optionally from 50 to 150. A1/A2 within a suitable range is conducive to giving full play to the synergistic effect between lithium bis(fluorosulfonyl)imide and lithium tetrafluoroborate, whereby the non-aqueous electrolyte is less likely to corrode the aluminum foil collector, thereby further improving the cycle performance and storage performance of the secondary battery.

In any embodiment of the present application, A1/B1 is from 4 to 9, optionally from 4 to 7. A1/B1 within a suitable range is conducive to giving full play to the synergistic effect between lithium bis(fluorosulfonyl)imide and vinyl fluorocarbonate, and the non-aqueous electrolyte can have high thermal stability and electrical conductivity at the same time, which can further improve the cycle performance and hot box safety performance of the secondary battery.

In any embodiment of the present application, A2/A3 is 0.5 to 13.5, optionally 1 to 10. A2/A3 within a suitable range is conducive to giving full play to the synergistic effect between lithium tetrafluoroborate and lithium bifluoroxalate, which not only can better protect the aluminum foil collector, but also can form a low-impedance organic-inorganic composite interface on the surface of the negative active material, thus further improving the cycle performance and hot box safety performance of the secondary battery.

In any embodiment of the present application, the non-aqueous electrolyte further satisfies that: (A2+A3)/B1 is from 0.008 to 0.8, optionally, (A2+A3)/B1 is from 0.026 to 0.2. This ensures that BF₄⁻ and DFOB⁻ in the non-aqueous electrolyte form free ions and reduce the association between anion and cation, thereby the improved effect of BF₄⁻ and DFOB⁻ on the kinetic performance of the secondary battery is fully exerted.

In any embodiment of the present application, A1 is from10% to 15%, optionally from 10% to 13%.

In any embodiment of the present application, A2 is from 0.01% to 0.3%, optionally from 0.05% to 0.2%.

In any embodiment of the present application, A3 is from 0.01% to 0.5%, optionally from 0.015% to 0.1%.

In any embodiment of the present application, B1 is from 1.0% to 2.5%, optionally from 1.5% to 2.5%.

In any embodiment of the present application, the non-aqueous solvent comprises: a first solvent comprising at least one of ethylene carbonate, propylene carbonate and butylene carbonate, wherein the first solvent is present in a mass content of C1 in the non-aqueous solvent, based on the total mass of the non-aqueous solvent; a second solvent comprising at least one of methyl ethyl carbonate, diethyl carbonate, dimethyl carbonate, dipropyl carbonate, methyl propyl carbonate and ethyl propyl carbonate, wherein the second solvent is present in a mass content of C2 in the non-aqueous solvent, based on the total mass of the non-aqueous solvent; and a third solvent comprising at least one of methyl formate, methyl acetate, ethyl acetate, propyl acetate, methyl propionate, ethyl propionate, propyl propionate, methyl butyrate and ethyl butyrate, wherein the third solvent is present in a mass content of C3 in the non-aqueous solvent, based on the total mass of the non-aqueous solvent; wherein the non-aqueous solvent satisfies that: C1 is from 10% to 30%, C2 is from 50% to 90% and C3 is from 0% to 20%.

In any embodiment of the present application, C1/(C2+C3) is from 0.1 to 0.45, more optionally from 0.2 to 0.3.

In the present application, the non-aqueous electrolyte comprises: a second additive comprising at least one of vinylene carbonate, ethylene sulfate, 1,3-propanesultone; wherein the second additive is present in a mass content of B2 in the non-aqueous electrolyte, based on the total mass of the non-aqueous electrolyte; optionally, wherein B2 is from 0.05% to 2%, optionally from 0.5% to 2%. The second additive helps to further improve the interface performance of the positive and/or negative electrodes, thereby further improving at least one of the cycle performance, storage performance, hot box safety performance and kinetic performance of the secondary battery.

In any embodiment of the present application, (A1+B2)/C1 is from 0.4 to 1.3, optionally from 0.4 to 0.8. This results in excellent cycle performance of the secondary battery and also avoids deterioration of kinetic and power performance.

In the present application, the non-aqueous electrolyte comprises: a third additive comprising at least one of sulfamic acid and a salt thereof; wherein the third additive is present in a mass content of B3 in the non-aqueous electrolyte, based on the total mass of the non-aqueous electrolyte; optionally, wherein B3 is from 0.005% to 0.1%, optionally from 0.005% to 0.05%. This helps to improve the cycle performance and kinetic performance of the secondary battery.

A second aspect of the present application provides a secondary battery comprising a positive electrode plate, a negative electrode plate and the non-aqueous electrolyte according to according to the first aspect of the present application, whereby the secondary battery of the present application can simultaneously have good cycle performance, storage performance, hot box safety performance, and kinetic performance.

In any embodiment of the present application, the non-aqueous electrolyte has a conductivity at room temperature of x mS/cm, the negative electrode plate has a thickness of L µm,
and the secondary battery satisfies: $L \leq 120 \times \sqrt{x / 8}$.

In any embodiment of the present application, the positive electrode plate comprises a layered material with a molecular formula of LiₐNi_{b}Co_{c}Mn_{d}AlₑM_{f}O_{g}Aₕ, in which M represents a cation doped at transition metal site, A represents an anion doped at oxygen site, 0.8≤a≤1.2, 0≤b≤1, 0≤c≤1, 0≤d≤1, 0≤e≤1, 0≤f≤0.2 0≤g≤2, 0≤h≤2, b + c +d+e+f=1, g+h=2.

In some embodiments of the present application, M is selected from at least one of Si, Ti, Mo, V, Ge, Se, Zr, Nb, Ru, Pd, Sb, Ce, Te, and W.

In some embodiments of the present application, A is selected from at least one of F, N, P, and S; optionally, A is selected from F.

In some embodiments of the present application, 0 <b< 0.98, optionally, 0.50 ≤b< 0.98.

In some embodiments of the present application, c = 0.

In some embodiments of the present application, 0<c≤0.20, optionally, 0 < c ≤ 0.10.

In some embodiments of the present application, d = 0 and 0 < e < 0.50, optionally, d = 0 and 0 < e ≤ 0.10.

In some embodiments of the present application, e = 0 and 0 < d < 0.50, optionally, e = 0 and 0 < d ≤ 0.10.

In some embodiments of the present application, 0 < d < 0.50 and 0 < e < 0.50, optionally, 0 < d ≤ 0.30 and 0 < e ≤ 0.10.

A third aspect of the present application provides a battery module comprising the secondary battery of the second aspect of the present application.

A fourth aspect of the present application provides a battery pack, comprising one of the secondary battery of the second aspect of the present application and the battery module of the third aspect.

A fifth aspect of the present application provides an electrical device comprising at least one of the secondary battery of the second aspect of the present application, the battery module of the third aspect, and the battery pack of the fourth aspect.

The secondary battery of the present application can simultaneously have good cycle performance, storage performance, hot box safety performance, and kinetic performance, and the battery module, battery pack, and electrical device of the present application include the secondary battery provided in the present application and thus have at least the same advantages as the secondary battery.

### DESCRIPTION OF THE DRAWINGS

In order to explain the technical solutions of the embodiments of the present application more clearly, the following will briefly introduce the drawings that need to be used in the embodiments of the present application. Obviously, the drawings described below are only some embodiments of the present application. A person of ordinary skill in the art can obtain other drawings based on the drawings without creative work.
Fig. 1 is a schematic diagram of a secondary battery according to an embodiment of the present application.
Fig. 2 is an exploded view of a secondary battery according to an embodiment of the present application.
Fig. 3 is a schematic diagram of a battery module according to an embodiment of the present application.
Fig. 4 is a schematic diagram of a battery pack according to an embodiment of the present application.
Fig. 5 is an exploded view of the battery pack according to an embodiment of the present application as shown in Fig. 4.
Fig. 6 is a schematic diagram of an electrical device according to an embodiment of the present application using the secondary battery of the present application as power.

In the drawings, the accompanying drawings are not necessarily drawn to actual scale. The reference numerals are defined as follows:
1 battery pack
2 upper case body
3 lower case body
4 battery module
5 battery
51 housing
52 electrode assembly
53 cover plate.

### DETAILED DESCRIPTION

Hereinafter, embodiments of the non-aqueous electrolyte, the secondary battery, the battery module, the battery pack, and the electrical device that specifically disclose the present application will be described in detail with reference to the accompanying drawings as appropriate. However, unnecessary detailed descriptions may be omitted in some cases, for example the detailed description of a well-known item or the repetitive description of an actual identical structure so as to prevent the following description from becoming unnecessarily redundant and to facilitate understanding by those skilled in the art.

With the application and promotion of secondary batteries, their comprehensive performance is receiving more and more attention. The non-aqueous electrolyte is one of the key factors affecting the performance of secondary batteries, and the most widely commercialized non-aqueous electrolyte system is a mixed carbonate solution of lithium hexafluorophosphate. However, the thermal stability of lithium hexafluorophosphate is poor in high temperature environment, and it will decompose at higher temperature to form PF₅. PF5 has strong Lewis acidity, which will interact with the lone pair electrons on the oxygen atom in the solvent molecule and cause the solvent to decompose. In addition, PF₅ is highly sensitive to the trace water in the non-aqueous electrolyte, and will generate HF when it meets water, thus increasing the acidity of the non-aqueous electrolyte, which will easily corrode the positive active material and the positive electrode collector and cause the leaching of transition metal ions from the positive active material. In addition, the transition metal ions in the positive active material will be reduced to transition metal after leaching and migrating to the negative electrode, which is equivalent to a "catalyst" and will catalyze the decomposition of solid electrolyte interphase (SEI) on the surface of the negative active material, resulting in by-products. A part of the by-products is gas, thus causing the secondary battery to swell and affecting the safety performance of the secondary battery; another part of the by-products is deposited on the surface of the negative active material, which will obstruct the lithium ion transport channels and cause the secondary battery's impedance to increase, thus affecting the kinetic performance of the secondary battery. Furthermore, in order to replenish the lost interphase, the non-aqueous electrolyte and the active lithium ions inside the battery are continuously consumed, which can bring irreversible effects on the capacity retention of the secondary battery.

The inventors of the present application unexpectedly discovered, after conducting extensive research, that when the non-aqueous electrolyte contains suitable amounts of lithium bis(fluorosulfonyl)imide, lithium tetrafluoroborate, lithium difluoro(oxalate)borate and fluoroethylene carbonate at the same time, it can enable the secondary battery to simultaneously have good cycle performance, storage performance, hot box safety performance and kinetic performance.

### Non-aqueous electrolyte

Specifically, a first aspect of the present application provides a non-aqueous electrolyte comprising an electrolyte salt, a non-aqueous solvent, a first additive, a second additive and a third additive. The electrolyte salt comprises: lithium bis(fluorosulfonyl)imide, wherein based on the total mass of the non-aqueous electrolyte, lithium bis(fluorosulfonyl)imide is present in a mass content of A1; lithium tetrafluoroborate, wherein based on the total mass of the non-aqueous electrolyte, lithium tetrafluoroborate is present in a mass content of A2; and lithium difluoro(oxalate)borate, wherein based on the total mass of the non-aqueous electrolyte, lithium difluoro(oxalate)borate is present in a mass content of A3. The first additive comprises fluoroethylene carbonate, wherein based on the total mass of the non-aqueous electrolyte, fluoroethylene carbonate is present in a mass content of B1, wherein the second additive comprises at least one of vinylene carbonate, ethylene sulfate, 1,3-propanesultone, and wherein the second additive is present in a mass content of B2 based on the total mass of the non-aqueous electrolyte, wherein the third additive comprises at least one of sulfamic acid and a salt thereof, and wherein the third additive is present in a mass content of B3 based on the total mass of the non-aqueous electrolyte. The non-aqueous electrolyte satisfies that: A1 is from 9% to 15%, A1/A2 is from 30 to 1500, A1/B1 is from 3.6 to 15 and A2/A3 is from 0.02 to 30.

The non-aqueous electrolyte of the present application comprises lithium bis(fluorosulfonyl)imide as the primary lithium salt with a mass content of 9% to 15% in the non-aqueous electrolyte. The chemical formula of lithium bis(fluorosulfonyl)imide is F₂NO₄S₂ . Li. The N atom is connected to two electron-absorbing sulfonyl groups, which allows the charge on the N atom to be fully delocalized, and thus lithium bis(fluorosulfonyl)imide has a low lattice energy and can be easily dissociated, thus improving the conductivity of the non-aqueous electrolyte and reducing the viscosity of the non-aqueous electrolyte. In addition, lithium bis(fluorosulfonyl)imide has good high temperature resistance and is not easily hydrolyzed, and can form a thinner, lower impedance and more thermally stable interfacial film on the surface of the negative active material, thus reducing the side reaction between the negative active material and the non-aqueous electrolyte. Therefore, lithium bis(fluorosulfonyl)imide is expected to be one of the next-generation primary lithium salts to replace lithium hexafluorophosphate.

However, one of the disadvantages of using lithium bis(fluorosulfonyl)imide as the primary lithium salt is the corrosion of the aluminum foil collector at about 3.7 V. vs Li/Li+, and such corrosion is further exacerbated at high temperature and high voltage. The corrosion of the aluminum foil collector will seriously affect the performance of the secondary battery, such as increasing battery polarization and irreversible capacity loss, and even affecting the safety performance of the secondary battery. It is mainly manifested in the following aspects: some solid insoluble corrosion products will increase the internal resistance of the secondary battery; some soluble corrosion products will pollute and intensify the decomposition of the non-aqueous electrolyte and increase the self-discharge of the secondary battery; Al³⁺ generated during the corrosion process may migrate to the negative electrode by diffusion and be reduced to aluminum dendrites. The inventors also accidentally discovered during their research that another disadvantage of using lithium bis(fluorosulfonyl)imide as the primary lithium salt is that lithium bis(fluorosulfonyl)imide reacts with LiC₆ of the negative electrode and releases large amounts of gases (e.g., SO₂, NO₂) and heat, which affects the safety performance of the secondary battery, especially the hot box safety performance

As a result, secondary batteries using lithium bis(fluorosulfonyl)imide as the primary lithium salt are currently difficult to commercialize.

The inventors of the present application have found through extensive research that by using lithium tetrafluoroborate, lithium borate bis(fluorosulfonyl)imide and fluoroethylene carbonate in a non-aqueous electrolyte in which lithium bis(fluorosulfonyl)imide is the main lithium salt, and by reasonably adjusting the content A1 of lithium bis(fluorosulfonyl)imide, the content A2 of lithium tetrafluoroborate, the content A3 of lithium difluoro(oxalate)borate and the content B1 of fluoroethylene carbonate to satisfy A1/A2 of 30 to 1500, A1/B1 of3.6 to 15 and A2/A3 of 0.02 to 30, the non-aqueous electrolyte can simultaneously have high thermal stability, high conductivity and wide electrochemical window, and the non-aqueous electrolyte can also passivate the aluminum foil collector and form a dense, stable and low-impedance interfacial film on the surface of the negative active material. Thus the secondary battery using such non-aqueous electrolyte of the present application can have good cycle performance, storage performance, hot box safety performance and kinetic performance at the same time.

Although the mechanism is unclear, the inventors speculate that the possible reasons include the following reasons.

First, lithium tetrafluoroborate has a passivating effect on the aluminum foil collector, which can be preferentially decomposed by oxidation and form a passivating film on the surface of the aluminum foil collector, thus effectively improving the corrosion of lithium bis(fluorosulfonyl)imide on the aluminum foil collector; at the same time, because the ionic radius of BF₄⁻ is small and BF₄⁻ is easy to associate. Thus when its content is too high, it will reduce the conductivity of the non-aqueous electrolyte. The inventors further found that when the content A1 of lithium bis(fluorosulfonyl)imide and the content A2 of lithium tetrafluoroborate are reasonably adjusted to meet the A1/A2 of 30 to 1500, the synergistic effect between them can be fully exerted. Thus, the resulting non-aqueous electrolyte has both high thermal stability and high conductivity, and it is not easy to corrode the aluminum foil collector. When A1/A2 is greater than 1500, the passivation effect of lithium tetrafluoroborate on the aluminum foil cannot prevent the corrosion of lithium bis(fluorosulfonyl)imide on the aluminum foil collector, and the cycle performance of the secondary battery is poor; when A1/A2 is less than 30, too much lithium tetrafluoroborate causes the conductivity of the non-aqueous electrolyte to drop significantly, and the kinetic performance of the secondary battery becomes poor.

Second, FEC can undergo reductive decomposition reaction at higher potentials and can form LiF-rich interfacial film with certain flexibility on the surface of the negative active material, which can inhibit the reductive decomposition of non-aqueous solvents at lower potentials and inhibit the embedding of non-aqueous solvents into the negative active material; at the same time, the formed interfacial film contains more chemically stable LiF components, which can effectively reduce the reaction between LiFSI and LiC₆ and improve the hot box safety performance of the secondary battery. In addition, FEC is resistant to high voltage oxidation, which is conducive to matching high voltage positive active materials, thus helping to improve the energy density of the secondary battery. The inventors further found through extensive research that when the content A1 of lithium bis(fluorosulfonyl)imide and B1 of fluorosubstituted vinyl carbonate are reasonably adjusted to meet A1/B1 of 3.6 to 15, it is beneficial to giving full play to the improved effect of FEC on the hot box safety performance, cycle performance and energy density of the secondary battery. When A1/B1 is greater than 15, the protective effect of FEC on the negative electrode cannot prevent the reaction between LiFSI and LiC₆, and the hot-box safety performance of the secondary battery is poor; when A1/B1 is less than 3.6, there are too many LiF components in the interfacial film on the surface of the negative active material, and the internal resistance of the secondary battery increases significantly and the kinetic performance becomes poor.

Third, the radius of the anion DFOB⁻ of 1 lithium difluoro(oxalate)borate is small, making the charge transfer resistance of the non-aqueous electrolyte smaller, thus the non-aqueous electrolyte has relatively high conductivity at both high and low temperatures, which can broaden the electrochemical window of the non-aqueous electrolyte. The B-O bond in the structure of lithium difluoro(oxalate)borate can be bonded with Al³⁺ to form a passivation film on the surface of the aluminum foil collector, thus effectively improving the corrosion of the aluminum foil collector caused by lithium bis(fluorosulfonyl)imide. At the same time, because the molecular structure of lithium difluoro(oxalate)borate contains an oxalate group, its thermal stability is lower than that of lithium tetrafluoroborate, and it will be oxidized to form carbon dioxide gas when heated, so when its content is too high, it will reduce the thermal stability of the non-aqueous electrolyte and increase the gas production of the secondary battery. The inventors further found through extensive research that when the content A2 of lithium tetrafluoroborate and the content A3 of lithium difluoro(oxalate)borate e are reasonably adjusted to meet the A2/A3 of 0.02 to 30, it not only can better protect the aluminum foil collector, but also can form a low-impedance organic-inorganic composite interface on the surface of the negative active material, thus further improving the cycle performance and kinetic performance of the secondary battery. When A2/A3 is greater than 30, the reduction effect of lithium difluoro(oxalate)borate on the negative electrode interface impedance is weak and insufficient to compensate for the deterioration of lithium tetrafluoroborate on the kinetic performance of the secondary battery; when A2/A3 is less than 0.02, too much lithium difluoro(oxalate)borate leads to the deterioration of the thermal stability of the non-aqueous electrolyte and the deterioration of the storage performance and hot box safety performance of the secondary battery.

Thus, the secondary battery using the non-aqueous electrolyte of the present application can simultaneously have good cycle performance, storage performance, hot box safety performance and kinetic performance probably because of the synergistic effect formed between the above components. The combination of lithium tetrafluoroborate and lithium difluoro(oxalate)borate can effectively improve the corrosion of lithium bifluorosulfonimide on the aluminum foil collector, reduce the battery polarization and irreversible capacity loss, and improve the cycle performance and storage performance of the secondary battery. The reaction of lithium bis(fluorosulfonyl)imide with LiC₆ can be effectively reduced by fluoroethylene carbonate to improve the hot box safety performance of the secondary battery. The combination of lithium tetrafluoroborate, lithium difluoro(oxalate)borate and fluoroethylene carbonate can form an organic-inorganic composite interface containing F and B atoms on the surface of the negative active material to reduce the internal resistance of the secondary battery and improve the kinetic performance of the secondary battery.

In some embodiments, A1/A2 may be from 30 to 1000, from 30 to 750, from 30 to 500, from 30 to 400, from 30 to 300, from 30 to 250, from 30 to 200, from 30 to 150, from 30 to 100, from 30 to 80, from 50 to 1000, from 50 to 750, from 50 to 500, from 50 to 400, from 50 to 300, from 50 to 250, from 50 to 200, from 50 to 150, from 50 to 120, from 50 to 100, or from 50 to 80.

In some embodiments, A1/B1 may be from 4 to 15, from 4 to 14, from 4 to 13, from 4 to 12, from 4 to 11, from 4 to 10, from 4 to 9, from 4 to 8, from 4 to 7, from 5 to 15, from 5 to 14, from 5 to 13, from 5 to 12, from 5 to 11, from 5 to 10, from 5 to 9, from 5 to 8, or from 5 to 7.

In some embodiments, A2/A3 is from 0.1 to 30, from 0.1 to 25, from 0.1 to 20, from 0.1 to 18, from 0.1 to 15, from 0.1 to 13.5, from 0.1 to 12, from 0.1 to 11, from 0.1 to 10, from 0.1 to 9, from 0.1 to 8, from 0.1 to 7, from 0.1 to 6, from 0.1 to 5, from 0.5 to 30, from 0.5 to 25, from 0.5 to 20, from 0.5 to 18, from 0.5 to 15, from 0.5 to 13.5, from 0.5 to 12, from 0.5 to 11, from 0.5 to 10, from 0.5 to 9, from 0.5 to 8, from 0.5 to 7, from 0.5 to 6, from 0.5 to 5, from 1 to 30, from 1 to 25, from 1 to 20, from 1 to 18, from 1 to 15, from 1 to 13.5, from 1 to 12, from 1 to 11, from 1 to 10, from 1 to 9, from 1 to 8, from 1 to 7, from 1 to 6, or from 1 to 5.

A1/A2 within a suitable range is conducive to giving full play to the synergistic effect between lithium bis(fluorosulfonyl)imide and lithium tetrafluoroborate, whereby the non-aqueous electrolyte is less likely to corrode the aluminum foil collector, thereby further improving the cycle performance and storage performance of the secondary battery.

A1/B1 is in a suitable range, which is conducive to giving full play to the synergistic effect between lithium bis(fluorosulfonyl)imide and vinyl fluorocarbonate, and the non-aqueous electrolyte can simultaneously take into account the higher thermal stability and electrical conductivity, which can further improve the cycle performance and hot box safety performance of the secondary battery.

When A2/A3 is in a suitable range, the synergistic effect between lithium tetrafluoroborate and lithium bifluoroxalate can be fully utilized, which not only can better protect the aluminum foil collector, but also can form a low impedance organic-inorganic composite interfacial film on the surface of the anode active material, which can further improve the cycling performance and kinetic performance of the secondary battery.

Lithium tetrafluoroborate and lithium difluoro(oxalate)borate have small anion radii, which are not easily dissociated in non-aqueous electrolytes, and the anions and cations are easily associated. The inventors further found through extensive research that when the content A2 of lithium tetrafluoroborate, the content A3 of lithium difluoro(oxalate)borate and the content B1 of fluorinated fluoroethylene carbonate are reasonably adjusted to meet (A2+A3)/B1 of 0.008 to 0.8, the non-aqueous electrolyte has a moderate viscosity and can maintain a high electrical conductivity. The possible reason is that the FEC has a high dielectric constant, which ensures that BF₄⁻ and DFOB⁻ in the non-aqueous electrolyte form free ions and reduce the association between anion and cation, thereby the improved effect of BF₄⁻ and DFOB⁻ on the kinetic performance of the secondary battery is fully exerted. In addition, the following situations can be effectively avoided: when (A2+A3)/B1 is greater than 0.8, BF₄⁻ and DFOB- in the non-aqueous electrolyte tend to associate, resulting in a possible increase in the viscosity and decrease in the conductivity of the non-aqueous electrolyte; when (A2+A3)/B1 is less than 0.008, the conductivity of the non-aqueous electrolyte may decrease due to the high viscosity of the FEC itself. Optionally, in some embodiments, (A2+A3)/B1 is from 0.01 to 0.8, from 0.01 to 0.7, from 0.01 to 0.6, from 0.01 to 0.5, from 0.01 to 0.4, from 0.01 to 0.3, from 0.01 to 0.2, from 0.026 to 0.8, from 0.026 to 0.7, from 0.026 to 0.6, from 0.026 to 0.5, from 0.026 to 0.5, from 0.026 to 0.4, from 0.026 to 0.3, from 0.026 to 0.2, from 0.1 to 0.8, from 0.1 to 0.7, from 0.1 to 0.6, from 0.1 to 0.5, from 0.1 to 0.4, from 0.1 to 0.3, or from 0.1 to 0.2.

The non-aqueous electrolyte of the present application comprises lithium bis(fluorosulfonyl)imide as the primary lithium salt, which is present in a high mass content in the non-aqueous electrolyte. In some embodiments, A1 may be from 10% to 15%, from 11% to 15%, from 12% to 15%, from 13% to 15%, from 9% to 14%, from 10% to 14%, from 11% to 14%, from 12% to 14%, from 13% to 14%, from 9% to 13%, from 10% to 13%, from 11% to 13%, or from 12% to 13%.

When the content of LiBF₄ increases, the conductivity of the non-aqueous electrolyte decreases, which is not conducive to the formation of a stable interfacial film on the surface of the negative active material. In some embodiments, A2 may be from 0.01% to 0.3%. Optionally, A2 may be from 0.02% to 0.3%, from 0.02% to 0.26%, from 0.02% to 0.22%, from 0.02% to 0.2%, from 0.02% to 0.18%, from 0.02% to 0.16%, from 0.02% to 0.14%, from 0.02% to 0.12%, from 0.02% to 0.1%, from 0.05% to 0.3%, from 0.05% to 0.26%, from 0.05% to 0.22%, from 0.05% to 0.2%, from 0.05% to 0.18%, from 0.05% to 0.16%, from 0.05% to 0.14%, from 0.05% to 0.12%, or from 0.05% to 0.1%.

LiDFOB contains an oxalate group in the molecular structure that will be oxidized by heat to form carbon dioxide gas, reducing the thermal stability of the non-aqueous electrolyte. In some embodiments, A3 may be from 0.01% to 0.5%. Optionally, A3 may be from 0.01% to 0.45%, from 0.01% to 0.4%, from 0.01% to 0.35%, from 0.01% to 0.3%, from 0.01% to 0.25%, from 0.01% to 0.2%, from 0.01% to 0.15%, from 0.01% to 0.1%, from 0.015% to 0.45%, from 0.015% to 0.4%, from 0.015% to 0.35%, from 0.015% to 0.3%, from 0.015% to 0.25%, from 0.015% to 0.2%, from 0.015% to 0.15%, or from 0.015% to 0.1%.

When the content of FEC increases, the viscosity of the non-aqueous electrolyte increases and the conductivity decreases; at the same time, FEC is prone to decompose at high temperatures to form HF, which destroys the structural stability of the positive active material, increases the gas production of the secondary battery, and affects the storage performance and hot box safety performance of the secondary battery. In some embodiments, B1 may be from 1.0% to 2.5%. For example, B1 may be from 1.1% to 2.5%, from 1.2% to 2.5%, from 1.3% to 2.5%, from 1.4% to 2.5%, from 1.5% to 2.5%, from 1.6% to 2.5%, from 1.7% to 2.5%, from 1.8% to 2.5%, from 1.9% to 2.5%, or from 2% to 2.5%.

In some embodiments, the non-aqueous solvent comprises at least one of a first solvent, a second solvent, and a third solvent.

The first solvent is a cyclic carbonate compound, which may comprise, for example, at least one of ethylene carbonate (EC), propylene carbonate (PC), and butylene carbonate (BC). Optionally, the first solvent comprises ethylene carbonate.

The second solvent is a chain carbonate compound, which may comprise, for example, at least one of methyl ethyl carbonate (EMC), diethyl carbonate (DEC), dimethyl carbonate (DMC), dipropyl carbonate (DPC), methyl propyl carbonate (MPC), ethyl propyl carbonate (EPC). Optionally, the second solvent comprises at least one of methyl ethyl carbonate (EMC), diethyl carbonate (DEC), and dimethyl carbonate (DMC).

In some embodiments, the non-aqueous solvent comprises at least a first solvent and a second solvent. If the content of the electrolyte salt and the first additive described above is too high, the viscosity of the non-aqueous electrolyte will increase and the conductivity of the non-aqueous electrolyte will decrease, which is not conducive to the formation of a uniform, dense, stable and low-impedance interfacial film on the surface of the negative active material. While the first solvent can increase the conductivity of the non-aqueous electrolyte due to its high dielectric constant; the second solvent can reduce the viscosity of the non-aqueous electrolyte due to its low viscosity. Thus, when the non-aqueous solvent comprises both the first solvent and the second solvent, it helps the non-aqueous electrolyte to have a suitable viscosity and conductivity, which in turn facilitates lithium ion transport and the formation of a uniform, dense, stable and low-impedance interfacial film on the surface of the negative active material.

In some embodiments, the non-aqueous solvent may further comprise a third solvent. The third solvent is a carboxylic ester compound, which may comprise, for example, at least one of methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB). The third solvent helps the non-aqueous electrolyte to have a suitable viscosity and conductivity, which in turn facilitates lithium ion transport; furthermore, the third solvent helps to ensure that the BF4⁻ and DFOB⁻ in the non-aqueous electrolyte form free ions and reduce association between anion and cation, thereby enabling to give full play to effect of the BF4⁻ and DFOB⁻ on the improvement of the capacity retention and kinetic performance of the secondary battery.

The non-aqueous solvent of the present application may also comprise other solvents other than the first solvent, the second solvent, and the third solvent described above. As examples, the other solvents may include sulfone solvents, such as sulfolane (SF), methyl sulfonyl methane (MSM), ethyl methyl sulfone (EMS), and ethyl sulfonyl ethane (ESE).

In some embodiments, the first solvent has a mass content of C1 in the non-aqueous solvent, the second solvent has a mass content of C2 in the non-aqueous solvent, and the third solvent has a mass content of C3 in the non-aqueous solvent, all based on the total mass of the non-aqueous solvent, and the non-aqueous solvent satisfies that: C1 is from 10% to 30%, C2 is from 50% to 90%, and C3 is from 0% to 20%.

In some embodiments, C1/(C2+C3) is from 0.1 to 0.45, optionally from 0.2 to 0.3. When the non-aqueous solvent contains a suitable amount of the first solvent, and in particular, when it contains a suitable amount of ethylene carbonate, the free radical formed by the decomposition of lithium difluoro(oxalate)borate can induce ring opening and polymerization of ethylene carbonate, resulting in a denser and smoother interfacial film on the surface of the negative active material. This can effectively inhibit dendrite growth.

In the present application, the non-aqueous electrolyte comprises: a second additive comprising at least one of vinylene carbonate (VC), ethylene sulfate (DTD), and 1,3-propanesultone (PS). These second additives contribute to further improving the interfacial properties of the positive and/or negative electrodes, thereby further improving at least one of the cycle performance, storage performance, hot box safety performance, and kinetic performance of the secondary battery.

In some embodiments, the second additives are present in the non-aqueous electrolyte in a mass content of B2, which may be from 0.05% to 2% based on the total mass of the non-aqueous electrolyte. Optionally, B2 is from 0.1% to 2%, from 0.2% to 2%, from 0.3% to 2%, from 0.4% to 2%, from 0.5% to 2%, from 0.6% to 2%, from 0.7% to 2%, from 0.8% to 2%, from 0.9% to 2%, from 1% to 2%, from 0.1% to 1%, from 0.2% to 1%, from 0.3% to 1%, from 0.4% to 1%, from 0.5% to 1%, from 0.6% to 1%, from 0.7% to 1%, from 0.8% to 1%, from 0.9% to 1%, or from 1% to 1%.

In some embodiments, the content A1 of lithium bis(fluorosulfonyl)imide, the content B2 of the second additive, and the content C1 of the first solvent satisfy that: (A1+B2)/C1 is from 0.4 to 1.3, optionally from 0.4 to 0.8. The second additive helps to form a film on the surfaces of positive and negative electrode to reduce ongoing side reactions, thereby improving at least one of the cycle performance, storage performance, hot box safety performance, and kinetic performance of the secondary battery. However, when the content of the second additive is higher, the interfacial impedance of positive electrode and/or the interfacial impedance of negative electrode increases, which affects the power performance of the secondary battery. Lithium bis(fluorosulfonyl)imide can improve the conductivity and thermal stability of the non-aqueous electrolyte and reduce the interfacial impedance of positive electrode and/or the interfacial impedance of negative electrode, but it is corrosive to the aluminum foil collector, and its higher content affects the cycle performance of the secondary battery. The first solvent has a high dielectric constant, which helps the dissociation of lithium salt, so it can improve the conductivity of the non-aqueous electrolyte to a certain extent, but when the content of the first solvent is high, the viscosity of the non-aqueous electrolyte will increase on the one hand, and the thermal stability of the non-aqueous electrolyte will be affected on the other hand, which will affect the storage performance of the secondary battery. In further research, the inventors found that by controlling (A1+B2)/C1 between 0.4 and 1.3, optionally between 0.4 and 0.8, it helps to give full play to the synergistic effect between the above components and effectively reduce the defects of each component when used alone, thereby enabling the secondary battery to have excellent cycle performance and also avoiding deterioration of kinetic performance and power performance.

In the present application, the non-aqueous electrolyte comprises: a third additive comprising at least one of sulfamic acid and a salt thereof. The molecular formula of the sulfamic acid is H₃NO₃S, and the sulfamic acid salt (sulfamate) includes at least one of an ammonium salt, an alkali metal salt, an alkaline earth metal salt, an alkaline earth metal-like salt, and as an example, the sulfamic acid salt may include at least one of ammonium sulfamate, lithium sulfamate, sodium sulfamate, and zinc sulfamate. Optionally, the third additive comprises sulfamic acid, lithium sulfamate, or a combination thereof.

Sulfamic acid, which is more acidic and is commonly used in the preparation of lithium bis(fluorosulfonyl)imide, has not been found to be applicable in non-aqueous electrolytes. The inventors of the present application were surprised to find in further research that when the non-aqueous electrolyte of the present application contains an appropriate amount of sulfamic acid and the salt thereof, it helps to improve the cycle performance and kinetic performance of the secondary battery. Although the mechanism is still unclear, the inventors speculate that the possible reason is that sulfamic acid and the salt thereof help to improve the conductivity and reduce the viscosity of the non-aqueous electrolyte, and at the same time, they can also play a role in slowly dissolving lithium dendrites and other metals to a certain extent, thus reducing the lithium monomers, aluminum monomers and transition metal monomers deposited on the surface of the negative active material, and thus the secondary battery can have improved cycle performance and kinetic performance.

Sulfamic acid and the salt thereof are soluble in water and highly acidic, which when present in high levels can corrode the positive active material and destabilize the positive and negative interfacial films. In some embodiments, the third additive has a mass content of B3 in the non-aqueous electrolyte, optionally from 0.005% to 0.1%, more optionally from 0.005% to 0.05%, based on the total mass of the non-aqueous electrolyte.

In the present application, the non-aqueous electrolyte comprise both a second additive and a third additive as described above.

In some embodiments, the non-aqueous electrolyte may further comprise other electrolyte salts such as at least one of lithium hexafluorophosphate LiPF₆, lithium tetrafluoroborate LiBF₄, lithium perchlorate LiClO₄, lithium hexafluoroarsenate LiAsF₆, lithium trifluoromethanesulfonate LiTFS, lithium difluorophosphate LiPO₂F₂, lithium difluorobisoxalate phosphate LiDFOP and lithium tetrafluorooxalate phosphate LiTFOP. These other electrolyte salts may serve to further improve the interfacial properties of the positive and/or negative electrodes, or to improve the conductivity or thermal stability of the non-aqueous electrolyte. Optionally, the total mass content of these other electrolyte salts in the non-aqueous electrolyte is below 1%, more optionally below 0.5%, based on the total mass of the non-aqueous electrolyte.

The non-aqueous electrolyte of the present application can be prepared according to methods conventional in the art. For example, the additive, the non-aqueous solvent, the electrolyte salt, etc. can be mixed well to obtain a non-aqueous electrolyte. The order of addition of each material is not particularly limited; for example, the additive, the electrolyte salt, and the like can be added to the non-aqueous solvent and mixed well to obtain the non-aqueous electrolyte.

In the present application, the components of the non-aqueous electrolyte and the contents thereof can be determined according to methods known in the art. For example, they can be determined by gas chromatography-mass spectrometry (GC-MS), ion chromatography (IC), liquid chromatography (LC), nuclear magnetic resonance spectroscopy (NMR), etc.

It should be noted that when testing the non-aqueous electrolyte of the present application, the freshly prepared non-aqueous electrolyte can be taken directly, or the non-aqueous electrolyte can be obtained from the secondary battery. An exemplary method of obtaining non-aqueous electrolyte from a secondary battery includes the following steps: discharging the secondary battery to the discharge cut-off voltage (generally leaving the battery in a full discharge state for safety reasons) and then centrifuging it, after which an appropriate amount of the liquid obtained by centrifugation is the non-aqueous electrolyte. The non-aqueous electrolyte can also be obtained directly from the liquid injection port of the secondary battery.

### Secondary Battery

A second aspect of the present application provides a secondary battery, the secondary battery comprising an electrode assembly and a non-aqueous electrolyte, wherein the non-aqueous electrolyte is the non-aqueous electrolyte according to the first aspect of the present application, whereby the secondary battery of the present application can simultaneously have good cycle performance, storage performance, hot box safety performance, and kinetic performance.

The secondary battery of the present application may be a lithium secondary battery, and in particular may be a lithium-ion secondary battery.

The electrode assembly typically includes a positive electrode plate, a negative electrode plate and a separator, wherein the separator is provided between the positive electrode plate and the negative electrode plate, which mainly serves to prevent a short circuit between the positive electrode and the negative electrode, and at the same time allows lithium ions to pass through.

### [Positive electrode plate]

In some embodiments, the positive electrode plate comprises a positive electrode collector fluid and a positive electrode film provided on at least one surface of the positive electrode collector, the positive electrode film comprising a positive active material. For example, the positive electrode collector has two surfaces opposite each other in the direction of its own thickness, and the positive electrode film is provided on either or both of the two opposite surfaces of the positive electrode collector.

The positive electrode film comprises a positive active material, and the positive active material known in the art for secondary batteries can be used. For example, the positive active material may comprise at least one of a lithium transition metal oxide, a lithium-containing phosphate of olivine structure, and respective modified compounds thereof. Examples of lithium transition metal oxides may include at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their respective modified compounds. Examples of lithium phosphates containing olivine structures may include at least one of lithium iron phosphate, lithium iron phosphate composites with carbon, lithium manganese phosphate, lithium manganese phosphate composites with carbon, lithium manganese iron phosphate, lithium manganese iron phosphate composites with carbon, and their respective modified compounds. The present application is not limited to these materials, but may use other conventionally known materials that can be used as positive active materials for secondary batteries. These positive active materials may be used as alone or in combination of two or more.

In some embodiments, the positive active material comprises a layered material with a molecular formula of LiₐNi_{b}Co_{c}Mn_{d}AlₑM_{f}O_{g}Aₕ, in which M represents a cation doped at transition metal site, A represents an anion doped at oxygen site, 0.8≤a≤1.2, 0≤b≤1, 0≤c≤1, 0≤d≤1, 0≤e≤1, 0≤f≤0.2 0≤g≤2, 0≤h≤2, b + c + d + e +f = 1, g +h = 2.

The layered material with the molecular formula of LiₐNi_{b}Co_{c}Mn_{d}AlₑM_{f}O_{g}Aₕ can optionally be modified by M cation doping, modified by A anion doping or modified by both M cation and A anion doping, and the crystal structure of the layered material obtained after doping is more stable, which can further enhance the electrochemical performance of the secondary battery, such as cycle performance, kinetic performance, etc.

In some embodiments, M is selected from at least one of Si, Ti, Mo, V, Ge, Se, Zr, Nb, Ru, Pd, Sb, Ce, Te, and W.

In some embodiments, A is selected from at least one of F, N, P, and S. Optionally, A is selected from F. After modification by F doping, the crystal structure of LiₐNi_{b}Co_{c}Mn_{d}AlₑM_{f}O_{g}Aₕ is more stable, thereby enabling better cycle performance and kinetic performance of the secondary battery.

The values of a, b, c, d, e, f, g, and h satisfy the condition that LiₐNi_{b}Co_{c}Mn_{d}AlₑM_{f}O_{g}Aₕ remains electrically neutral.

In some embodiments, 0 < b < 0.98. Optionally, 0.50 ≤ b < 0.98, 0.55 ≤ b < 0.98, 0.60 ≤ b < 0.98, 0.65 ≤ b < 0.98, 0.70 ≤ b < 0.98, 0.75 ≤ b < 0.98, or 0.80 ≤ b < 0.98.

In some embodiments, c = 0.

In some embodiments, 0 < c ≤ 0.20. Optionally, 0 < c ≤ 0.15, 0 < c ≤ 0.10, 0 < c ≤ 0.09, 0 < c ≤ 0.08, 0 < c ≤ 0.07, 0 < c ≤ 0.06, 0 < c ≤ 0.05, 0 < c ≤ 0.04, 0 < c ≤ 0.03, 0 < c ≤ 0.02, or 0 < c ≤ 0.01. Cobalt is less abundant in the earth's crust, difficult to mine and expensive, so low cobalt or no cobalt has become an inevitable development trend for positive active materials. However, cobalt contributes greatly to the lithium ion diffusion rate of positive active materials, and low cobalt or no cobalt will reduce the lithium ion diffusion rate of positive active materials and affect the cycle performance of secondary batteries. Researchers have been working to enhance the lithium ion diffusion rate of low-cobalt or cobalt-free positive active materials, but there is no good solution yet.

The inventors of the present application unexpectedly discovered in the course of their research that when the content A2 of lithium tetrafluoroborate and the content A3 of lithium difluoro(oxalate)borate are reasonably adjusted and meet the A2/A3 of 0.02 to 30, a low-impedance interfacial film can be formed on the surface of the positive active material, and the B atoms in the structures of lithium tetrafluoroborate and lithium difluoro(oxalate)borate can easily bind to the O atoms in the positive active material. This reduces the charge transfer resistance of the positive active material and the diffusion resistance of lithium ions in the bulk phase of the positive active material. Therefore, when the non-aqueous electrolyte contains suitable amounts of lithium tetrafluoroborate and lithium difluoro(oxalate)borate, the low-cobalt or cobalt-free positive active material can have a significantly improved lithium ion diffusion rate, and the lithium ions in the bulk phase of the low-cobalt or cobalt-free positive active material can be replenished to the surface in a timely manner to prevent the surface of the low-cobalt or cobalt-free positive active material from over-delithiation, thus stabilizing the crystal structure of the low-cobalt or cobalt-free positive active material. Since the crystal structure of the low-cobalt or cobalt-free positive active material is more stable, the probability of the occurrence of problems such as structural properties, chemical properties or electrochemical properties of the positive active material becoming unstable due to excessive lithium removal from the surface of the low-cobalt or cobalt-free positive active material, for example, irreversible distortion and increase in lattice defects of the positive active material, is greatly reduced.

In some embodiments, d = 0 and 0 < e < 0.50. Optionally, d = 0 and 0 < e ≤ 0.45, d = 0 and 0 < e ≤ 0.40, d = 0 and 0 < e ≤ 0.35, d = 0 and 0 < e ≤ 0.30, d = 0 and 0 < e ≤ 0.25, d = 0 and 0 < e ≤ 0.20, d = 0 and 0 < e ≤ 0.15, or d = 0 and 0 < e ≤ 0.10.

In some embodiments, e = 0 and 0 < d < 0.50. Optionally, e = 0 and 0 < d ≤ 0.45, e = 0 and 0 < d ≤ 0.40, e = 0 and 0 < d ≤ 0.35, e = 0 and 0 < d ≤ 0.30, e = 0 and 0 < d ≤ 0.25, e = 0 and 0 < d ≤ 0.20, e = 0 and 0 < d ≤ 0.15, or e = 0 and 0 < d ≤ 0.10.

In some embodiments, 0 < d < 0.50 and 0 < e < 0.50. Optionally, 0 < d ≤ 0.30 and 0 < e ≤ 0.10.

In some embodiments, g = 2 and h = 0.

In some embodiments, g = 0 and h = 2.

In some embodiments, 0 < g < 2, 0 < h < 2, and g + h = 2.

As examples, layered materials with the molecular formula of LiₐNi_{b}Co_{c}Mn_{d}AlₑM_{f}O_{g}Aₕ include, but are not limited to, at least one of LiNi_{0.8}Co_{0.1}Mn_{0.1}O₂, LiNi_{0.6}Co_{0.2}Mn_{0.2}O₂ LiNi_{0.5}C_{0.2}Mn_{0.3}O₂, LiNi_{0.8}Co_{0.05}Mn_{0.15}O₂, LiNi_{0.7}Mn_{0.3}O₂, LiNi_{0.69}Co_{0.01}Mn_{0.3}O₂, LiNi_{0.68}Co_{0.02}Mn_{0.3}O₂, LiNi_{0.65}Co_{0.05}Mn_{0.3}O₂, LiNi_{0.63}Co_{0.07}Mn_{0.3}O₂, LiNi_{0.61}Co_{0.09}Mn_{0.3}O₂.

LiₐNi_{b}Co_{c}Mn_{d}AlₑM_{f}O_{g}Aₕ can be prepared according to conventional methods in the art. Exemplary preparation methods are as follows: a lithium source, a nickel source, a cobalt source, a manganese source, an aluminum source, an M-element precursor, and an A-element precursor are mixed and sintered. The sintering atmosphere may be an oxygen-containing atmosphere, for example, an air atmosphere or an oxygen atmosphere. The O₂ concentration of the sintering atmosphere is, for example, from 70% to 100%. The sintering temperature and sintering time can be adjusted according to the actual situation.

As an example, the lithium source includes, but is not limited to, at least one of lithium oxide (Li₂O), lithium phosphate (Li₃PO₄), lithium dihydrogen phosphate (LiH₂PO₄), lithium acetate (CH₃COOLi), lithium hydroxide (LiOH), lithium carbonate (Li₂CO₃), and lithium nitrate (LiNO₃). As an example, the nickel source includes, but is not limited to, at least one of nickel sulfate, nickel nitrate, nickel chloride, nickel oxalate, and nickel acetate. As an example, the cobalt source includes, but is not limited to, at least one of cobalt sulfate, cobalt nitrate, cobalt chloride, cobalt oxalate, and cobalt acetate. As an example, the manganese source includes, but is not limited to, at least one of manganese sulfate, manganese nitrate, manganese chloride, manganese oxalate, and manganese acetate. As an example, the aluminum source includes, but is not limited to, at least one of aluminum sulfate, aluminum nitrate, aluminum chloride, aluminum oxalate, and aluminum acetate. As an example, the element M precursor includes, but is not limited to, at least one of an oxide of the element M, a nitrate compound of the element M, a carbonate compound of the element M, a hydroxide compound of the element M, and an acetate compound of the element M. As an example, the precursors of element A include, but are not limited to, at least one of ammonium fluoride, lithium fluoride, hydrogen fluoride, ammonium chloride, lithium chloride, hydrogen chloride, ammonium nitrate, ammonium nitrite, ammonium carbonate, ammonium bicarbonate, ammonium phosphate, phosphoric acid, ammonium sulfate, ammonium bisulfate, ammonium bisulfite, ammonium sulfite, ammonium hydrogen sulfide, hydrogen sulfide, lithium sulfide, ammonium sulfide, and elemental sulfur.

In some embodiments, the mass content of the layered material with the molecular formula of LiₐNi_{b}Co_{c}Mn_{d}AlₑM_{f}O_{g}Aₕ is from 80% to 99%, based on the total mass of the positive electrode film. For example, the mass content of the layered material with the molecular formula of LiₐNi_{b}Co_{c}Mn_{d}AlₑM_{f}O_{g}Aₕ may be 80%, 81%, 82%, 83%, 84%, 85%, 86%, 87%, 88%, 89%, 90%, 91%, 92%, 93%, 94%, 95%, 96%, 97%, 98%, 99% or any of the above values the range consisting of Optionally, the layered material with the molecular formula of LiₐNi_{b}Co_{c}Mn_{d}AlₑM_{f}O_{g}Aₕ has a mass content of from 85% to 99%, from 90% to 99%, from 95% to 99%, from 80% to 98%, from 85% to 98%, from 90% to 98%, from 95% to 98%, from 80% to 97%, from 85% to 97%, from 90% to 97%, or from 95% to 97%.

In some embodiments, the positive electrode film may further optionally comprise a conductive agent for positive electrode. The present application does not particularly limit the type of conductive agent for positive electrode, and as an example, the conductive agent for positive electrode includes at least one of superconducting carbon, conductive graphite, acetylene black, carbon black, Cochin black, carbon dots, carbon nanotubes, graphene, and carbon nanofibers. In some embodiments, the mass content of the conductive agent for positive electrode is below 5%, based on the total mass of the positive electrode film.

In some embodiments, the positive electrode film further optionally comprises a binder for positive electrode. The present application does not particularly limit the type of the binder for positive electrode, and as an example, the binder for positive electrode may include at least one of polyvinylidene fluoride (PVDF), polytetrafluoroethylene (PTFE), vinylidene fluoride-tetrafluoroethylene-propylene terpolymer, vinylidene fluoride-hexafluoropropylene -tetrafluoroethylene terpolymer, vinylidene fluoride-hexafluoropropylene copolymer, and fluorinated acrylate resins. In some embodiments, the mass content of the binder for positive electrode is below 5%, based on the total mass of the positive electrode film.

In some embodiments, the positive electrode collector may be a metal foil or a composite collector. As an example of a metal foil, an aluminum foil may be used. The composite collector may include a base layer of polymeric material and a layer of metallic material formed on at least one surface of the base layer of polymeric material. As an example, the metal material may be selected from at least one of aluminum, aluminum alloy, nickel, nickel alloy, titanium, titanium alloy, silver, and silver alloy. As an example, the polymeric material base layer may be selected from polypropylene (PP), polyethylene terephthalate (PET), polybutylene terephthalate (PBT), polystyrene (PS), polyethylene (PE), etc.

The positive electrode film is typically made by coating a positive electrode slurry onto a positive electrodecollector, drying, and cold pressing. The positive electrode slurry is typically formed by dispersing the positive active material, an optional conductive agent, an optional binder, and any other components in a solvent and stirring well. The solvent may be N-methylpyrrolidone (NMP), but is not limited thereto.

### [Negative electrode plate]

In some embodiments, the negative electrode plate comprises a negative electrode collector and a negative electrode film disposed on at least one surface of the negative electrode collector, the negative electrode film comprising a negative active material. For example, the negative collector fluid has two surfaces opposite each other in the direction of its own thickness, and the negative electrode film r is provided on either or both of the two opposite surfaces of the negative electrode collector.

The negative active material may be a negative active material known in the art for secondary batteries. As an example, the negative active material includes, but is not limited to, at least one of natural graphite, artificial graphite, soft carbon, hard carbon, silicon-based material, tin-based material, and lithium titanate. The silicon-based material may include at least one of elemental silicon, silicon oxide, silicon-carbon composite, silicon-nitrogen composite, and silicon alloy material. The tin-based materials may include at least one of elemental tin, tin oxide, and tin alloy material. The present application is not limited to these materials, and other conventionally known materials that can be used as negative active materials for secondary batteries may also be used. These negative active materials may be used as just one alone or in combination of two or more.

In some embodiments, the negative electrode film may further optionally include a conductive agent for negative electrode. The present application does not particularly limit the type of the conductive agent for negative electrode and, as an example, the conductive agent for negative electrode may include at least one of superconducting carbon, conductive graphite, acetylene black, carbon black, Cochin black, carbon dots, carbon nanotubes, graphene, carbon nanofibers. In some embodiments, the mass content of the conductive agent negative electrode is below 5%, based on the total mass of the negative electrode film.

In some embodiments, the negative electrode film may further optionally comprise a binder for negative electrode. The present application does not particularly limit the type of the binder for negative electrode, and as an example, the binder for negative electrode may include at least one of styrene-butadiene rubber (SBR), water-soluble unsaturated resin SR-1B, aqueous acrylic resins (e.g., polyacrylic acid PAA, polymethacrylic acid PMAA, sodium polyacrylate PAAS), polyacrylamide (PAM), polyvinyl alcohol (PVA), sodium alginate (SA), and carboxymethyl chitosan (CMCS). In some embodiments, the mass content of the binder for negative electrode is below 5%, based on the total mass of the negative electrode film.

In some embodiments, the negative electrode film may optionally further include other additives. As examples, other additives may include thickeners, e.g., sodium carboxymethylcellulose (CMC-Na), PTC thermistor material, etc. In some embodiments, the mass content of the other additives is below 2%, based on the total mass of the negative electrode film.

In some embodiments, the negative electrode collector may be a metal foil or a composite collector. As an example of a metal foil, a copper foil may be used. The composite collector may include a polymeric material base layer and a layer of metallic material formed on at least one surface of the polymeric material base layer. As an example, the metal material may be selected from at least one of copper, copper alloy, nickel, nickel alloy, titanium, titanium alloy, silver, and silver alloy. As examples, the polymeric material base layer may be selected from polypropylene (PP), polyethylene terephthalate (PET), polybutylene terephthalate (PBT), polystyrene (PS), polyethylene (PE), etc.

In some embodiments, the non-aqueous electrolyte has a conductivity at room temperature of x mS/cm, the negative electrode plate has a thickness of L µm, and the secondary battery satisfies: $L \leq 120 \times \sqrt{x / 8}$ .

The inventors of the present application further found in the course of their research that when the conductivity (at room temperature) x mS/cm of the non-aqueous electrolyte and the thickness L µm of the negative electrode plate satisfy $L \leq 120 \times \sqrt{x / 8}$, the non-aqueous electrolyte helps to form a uniform, dense, stable and low-impedance organic-inorganic composite interfacial film on the surface of the negative active material, so that the secondary battery can have excellent electrochemical performance, and in particular, the secondary battery can have excellent kinetic performance.

The negative electrode film is usually formed by coating a negative electrode slurry on a negative electrode collector, drying and cold pressing. The negative electrode slurry is typically formed by dispersing the negative active material, optional conductive agent, optional binder, other optional additives in a solvent and stirring well. The solvent may be N-methylpyrrolidone (NMP) or deionized water, but is not limited thereto.

### [Separator]

A separator is arranged between the positive electrode plate and the negative electrode plate, which mainly functions as preventing short circuit of the positive and negative electrodes while allowing active ions to pass through. There is no particular limitation on the type of separator in the present application, and any well-known porous-structure separator with good chemical stability and mechanical stability can be selected.

In some embodiments, materials of the separator can be one or more selected from glass fibers, non-woven fabrics, polyethylene, polypropylene and polyvinylidene fluoride. The separator can be a single-layer film or a multi-layer composite film. When the separator is a multi-layer composite film, materials of each layer can be the same or different.

In some embodiments, the positive electrode plate, the negative electrode plate, and the separator can be made into an electrode assembly by a winding process or a stacking process.

In some embodiments, the secondary battery may include an outer package. The outer package may be used to package the electrode assembly and an electrolyte.

In some embodiments, the outer package of the secondary battery may be a hard case, such as a hard plastic case, an aluminum case, a steel case, and the like. The outer package of the secondary battery may also be a soft package, such as a pouch-type soft package. Material of the soft package can be plastic, such as one or more of polypropylene (PP), polybutylene terephthalate (PBT), and polybutylene succinate (PBS).

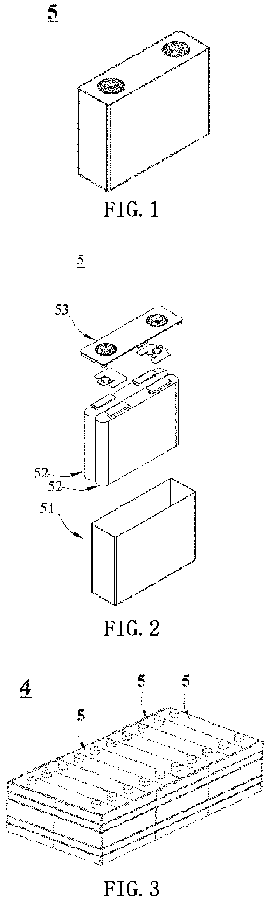

The present application does not have particular limitation to the shape of the secondary battery. The secondary battery may be cylindrical, square, or in other arbitrary shape. Fig. 1 shows a secondary battery 5 with a square structure as an example.

In some embodiments, referring to Fig. 2, the outer package may include a housing 51 and a cover plate 53. The housing 51 may include a bottom plate and side plates connected to the bottom plate, and the bottom plate and the side plates enclose a receiving cavity. The housing 51 has an opening communicated with the receiving cavity, and the cover plate 53 can cover the opening to close the receiving cavity. The positive electrode plate, the negative electrode plate and the separator may be wound or laminated to form an electrode assembly 52, which is encapsulated in the receiving cavity. A non-aqueous electrolyte is infiltrated into the electrode assembly 52. The number of electrode assemblies 52 contained in the secondary battery 5 may be one or more, which may be adjusted according to the demand.

The method for preparing the secondary battery of the present application is well known. In some embodiments, a positive electrode plate, a separator, a negative electrode plate, and a non-aqueous electrolyte may be assembled to form a secondary battery. As an example, the positive electrode plate, the separator, and the negative electrode plate can be formed into an electrode assembly by a winding process or a laminating process; the battery assembly is placed in an outer package, into which the non-aqueous electrolyte is injected after it is dried. After that, the processes of vacuum packing, steady standing, formation, and shaping are carried out, thereby obtaining a secondary battery.

In some embodiments of the present application, the secondary battery according to the present application can be assembled into battery modules, and the number of secondary battery contained in the battery modules can be multiple, and the specific number can be adjusted according to the application and capacity of the battery modules.

Fig. 3 is a schematic diagram of a battery module 4 as an example. As shown in Fig. 3, in the battery module 4, the plurality of secondary batteries 5 may be provided sequentially along the length of the battery module 4. Of course, they can also be arranged in any other way. Further the plurality of secondary batteries 5 can be secured by fasteners.

Optionally, the battery module 4 may further include a housing with a receiving space, and the plurality of secondary batteries 5 are received in the receiving space.

In some embodiments, the above-mentioned battery module may also be assembled into a battery pack, and the number of battery modules included in the battery pack may be adjusted according to the application and capacity of the battery pack.

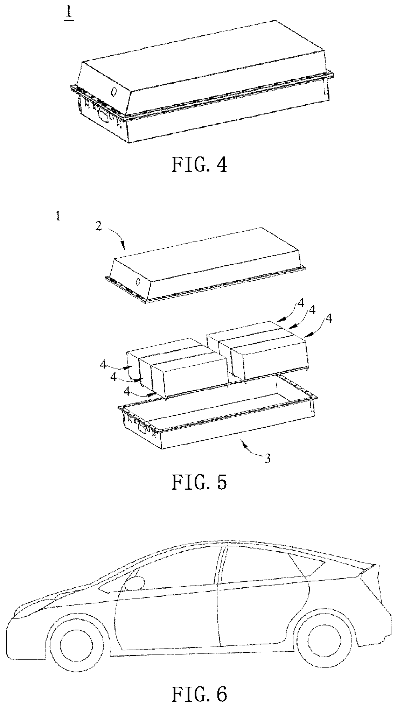

Figs. 4 and 5 show a battery pack 1 as an example. Referring to Figs. 4 and 5, the battery pack 1 may include a battery case and a plurality of battery modules 4 disposed in the battery case. The battery case includes an upper case body 2 and a lower case body 3. The upper case body 2 may cover the lower case body 3 to form a closed space for receiving the battery modules 4. The plurality of battery modules 4 may be arranged in the battery case in any manner.

### Electrical device

Embodiments of the present application also provide an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

Fig. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application. Unless otherwise stated, all parts, percentages, and ratios described in the following examples are based on weight, all reagents used in the examples are commercially available or synthesized according to conventional methods and can be directly used without further treatment, and all instruments used in the examples are commercially available.

The secondary batteries of Examples 1 to 43 and Comparative Examples 1 to 9 were prepared according to the following method. Out of Examples 1 to 43, Examples 1 to 14, 23 to 36 and 38 to 43 are according to the invention, and Examples 15 to 22 and 37 are comparative.

### Preparation of positive electrode plate

The positive active material LiNi_{0.6}Co_{0.2}Mn_{0.2}O₂, the conductive agent carbon black, and the binder polyvinylidene fluoride (PVDF) were mixed in an appropriate amount of solvent NMP with thorough stirring at a weight ratio of 97.5:1.4:1 to form a uniform positive electrode slurry; the positive electrode slurry was uniformly applied on the surface of the positive electrode collector aluminum foil, and after drying and cold pressing, the positive electrode plate was obtained.

### Preparation of negative electrode plate

The negative active material graphite, the binder butadiene rubber (SBR), the thickener sodium carboxymethyl cellulose (CMC-Na), and the conductive agent carbon black (Super P) were mixed in an appropriate amount of deionized water as solvent with thorough stirring at a weight ratio of 96.2:1.8:1.2:0.8 to form a uniform negative electrode slurry; the negative electrode slurry was evenly applied on the surface of the negative electrode collector copper foil. After drying and cold pressing, the negative electrode plate was obtained.

### Separator

A porous polyethylene film was used as the separator.

### Preparation of non-aqueous electrolyte

The electrolyte salt and additives were added to a non-aqueous solvent and mixed well to obtain a non-aqueous electrolyte. The composition of each component and the content thereof were shown in Table 1, respectively. In Table 1, the contents of each electrolyte salt and each additive component were based on the total mass of the non-aqueous electrolyte, and the contents of the first solvent, the second solvent and the third solvent were based on the total mass of the non-aqueous solvent, and "/" indicated that the corresponding component was not added.

### Preparation of secondary battery

The positive electrode plate, the separator, the negative electrode plate as prepared above were stacked and wound in order to obtain an electrode assembly; the electrode assembly was put into an outer package, to which above-mentioned electrolyte was added. Through encapsulation, standing, formation, and aging process, the secondary battery was obtained.

### Test section

### (1) Test for cycle performance of secondary battery at room temperature

At 25°C, the secondary battery was charged to 4.3V with a constant current of 1C, continued to charge at constant voltage until the current was 0.05C. At this time, the secondary battery was in a fully charged state, which charge capacity was recorded, i.e. the charge capacity of the first cycle. After the secondary battery was allowed for standing for 5min, it was discharged to 2.8V with a constant current of 0.5C. This was a cyclic charge-discharge process, which discharge capacity was recorded, i.e. the discharge capacity of the first cycle. The secondary battery was subjected to the above cyclic charge-discharge process, and the discharge capacity after each cycle was recorded. Capacity retention rate of secondary battery at 25°C after 600 cycles (%) = discharge capacity after 600 cycles/discharge capacity after the 1^{st} cycle× 100%.

### (2) Test for cycle performance of secondary battery at high temperature

At 45°C, the secondary battery was charged to 4.3V with a constant current of 1C, continued to charge at constant voltage until the current was 0.05C. At this time, the secondary battery was in a fully charged state, which charge capacity was recorded, i.e. the charge capacity of the first cycle. After the secondary battery was allowed for standing for 5min, it was discharged to 2.8V with a constant current of 0.5C. This was a cyclic charge-discharge process, which discharge capacity was recorded, i.e. the discharge capacity of the first cycle. The secondary battery was subjected to the above cyclic charge-discharge process, and the discharge capacity after each cycle was recorded. Capacity retention rate of secondary battery at 45°C after 600 cycles (%) = discharge capacity after 600 cycles/discharge capacity after the 1^{st} cycle× 100%.

### (3) Test for storage performance of secondary battery at high temperature

At 60°C, the secondary battery was charged to 4.3V with a constant current of 1C, and continued to charge at constant voltage until the current was 0.05C, at which time the volume of the secondary battery was tested by the drainage method and recorded as V₀. The secondary battery was placed in a thermostat at 60°C and stored for 30 days and then removed, at which time the volume of the secondary battery was tested by the drainage method and recorded as V₁. The volume expansion rate of the secondary battery after 30 days of storage at 60°C (%) = [(V₁-V₀)/V₀] × 100%.

### (4) Test for initial DC internal resistance of secondary battery

At 25°C, the secondary battery was charged to 4.3V with a constant current of 1C, and continued to charge with constant voltage until the current was 0.05C, at which time the secondary battery was fully charged; the secondary battery was discharged with a constant current of 0.5C and the secondary battery was adjusted to 50% SOC, at which time the voltage of the secondary battery was recorded as U₁; the secondary battery was discharged with a constant current I₁ of 4C for 30 seconds, and a sampling interval time of 0.1 second was used. The initial DC internal resistance of the secondary battery was expressed by using the discharge DC internal resistance of the secondary battery at 50% SOC, as the initial DC internal resistance (mΩ) = (U₁-U₂)/I₁.

### (5) Test for hot box safety performance of secondary battery

At 25°C, the secondary battery was charged to 4.3V at a constant current of 1C, and continued to charge at constant voltage until the current was 0.05C, at which time the secondary battery was fully charged; the fully charged secondary battery was placed in a well-sealed high-temperature chamber, and was heated to 100°C at 5°C/min, held for 1 hour, and then heated to 105°C at 5°C/min, held for 30 minutes, until the secondary battery failed. The highest temperature Tₘₐₓ before the secondary battery failed was recorded. The higher the Tₘₐₓ was, the better the hot box safety performance of the secondary battery was.

To ensure the reliability of the test results, each of the above tests can be performed using at least three parallel samples and take the average value as the test results.

Table 1 shown the preparation parameters for the non-aqueous electrolyte of Examples 1 to 43 and Comparative Examples 1 to 9, and Table 2 shown the test results obtained for Examples 1 to 43 and Comparative Examples 1 to 9 according to the performance test described above.

**Table 1**

| No. | Electrolyte salt | | | Additive | | | | | Non-aqueous solvent | | | | | |
|---|---|---|---|---|---|---|---|---|---|---|---|---|---|---|
| | LiFSI | LiBF₄ | LiDFOB | FEC | Second additive | | Third additive | | First solvent | | Second solvent | | Third solvent | |
| | Content Al(%) | Content A2(%) | Content A3(%) | Content B1(%) | Type | Content B2(%) | Type | Content B3(%) | Type | Content C1(%) | Type | Content C2(%) | Type | Content C3(%) |
| Example 1 | 12 | 0.01 | 0.05 | 2 | DTD | 0.5 | Sulfamic acid | 0.01 | EC | 20 | EMC | 75 | EA | 5 |
| Example 2 | 12 | 0.02 | 0.05 | 2 | DTD | 0.5 | Sulfamic acid | 0.01 | EC | 20 | EMC | 75 | EA | 5 |
| Example 3 | 12 | 0.05 | 0.05 | 2 | DTD | 0.5 | Sulfamic acid | 0.01 | EC | 20 | EMC | 75 | EA | 5 |
| Example 4 | 12 | 0.1 | 0.05 | 2 | DTD | 0.5 | Sulfamic acid | 0.01 | EC | 20 | EMC | 75 | EA | 5 |
| Example 5 | 12 | 0.2 | 0.05 | 2 | DTD | 0.5 | Sulfamic acid | 0.01 | EC | 20 | EMC | 75 | EA | 5 |
| Example 6 | 12 | 0.3 | 0.05 | 2 | DTD | 0.5 | Sulfamic acid | 0.01 | EC | 20 | EMC | 75 | EA | 5 |
| Example 7 | 12 | 0.15 | 0.01 | 2 | DTD | 0.5 | Sulfamic acid | 0.01 | EC | 20 | EMC | 75 | EA | 5 |
| Example 8 | 12 | 0.15 | 0.015 | 2 | DTD | 0.5 | Sulfamic acid | 0.01 | EC | 20 | EMC | 75 | EA | 5 |
| Example 9 | 12 | 0.15 | 0.02 | 2 | DTD | 0.5 | Sulfamic acid | 0.01 | EC | 20 | EMC | 75 | EA | 5 |
| Example 10 | 12 | 0.15 | 0.05 | 2 | DTD | 0.5 | Sulfamic acid | 0.01 | EC | 20 | EMC | 75 | EA | 5 |
| Example 11 | 12 | 0.15 | 0.1 | 2 | DTD | 0.5 | Sulfamic acid | 0.01 | EC | 20 | EMC | 75 | EA | 5 |
| Example 12 | 12 | 0.15 | 0.2 | 2 | DTD | 0.5 | Sulfamic acid | 0.01 | EC | 20 | EMC | 75 | EA | 5 |
| Example 13 | 12 | 0.15 | 0.3 | 2 | DTD | 0.5 | Sulfamic acid | 0.01 | EC | 20 | EMC | 75 | EA | 5 |
| Example 14 | 12 | 0.15 | 0.5 | 2 | DTD | 0.5 | Sulfamic acid | 0.01 | EC | 20 | EMC | 75 | EA | 5 |
| Example 15 | 12 | 0.18 | 0.04 | 1 | / | / | / | / | EC | 20 | EMC | 75 | EA | 5 |
| Example 16 | 12 | 0.18 | 0.04 | 1.5 | / | / | / | / | EC | 20 | EMC | 75 | EA | 5 |
| Example 17 | 12 | 0.18 | 0.04 | 2 | / | / | / | / | EC | 20 | EMC | 75 | EA | 5 |
| Example 18 | 12 | 0.18 | 0.04 | 2.5 | / | / | / | / | EC | 20 | EMC | 75 | EA | 5 |
| Example 19 | 10 | 0.08 | 0.05 | 2 | / | / | / | / | EC | 20 | EMC | 75 | EA | 5 |
| Example 20 | 11 | 0.1 | 0.05 | 2 | / | / | / | / | EC | 20 | EMC | 75 | EA | 5 |
| Example 21 | 12 | 0.12 | 0.05 | 2 | / | / | / | / | EC | 20 | EMC | 75 | EA | 5 |
| Example 22 | 13 | 0.14 | 0.05 | 2 | / | / | / | / | EC | 20 | EMC | 75 | EA | 5 |
| Example 23 | 9 | 0.3 | 0.05 | 2 | DTD | 0.5 | Sulfamic acid | 0.01 | EC | 20 | EMC | 75 | EA | 5 |
| Example 24 | 15 | 0.01 | 0.05 | 2 | DTD | 0.5 | Sulfamic acid | 0.01 | EC | 20 | EMC | 75 | EA | 5 |
| Example 25 | 9 | 0.1 | 0.05 | 2.5 | DTD | 0.5 | Sulfamic acid | 0.01 | EC | 20 | EMC | 75 | EA | 5 |
| Example 26 | 15 | 0.1 | 0.05 | 1 | DTD | 0.5 | Sulfamic acid | 0.01 | EC | 20 | EMC | 75 | EA | 5 |
| Example 27 | 12 | 0.01 | 0.5 | 2 | DTD | 0.5 | Sulfamic acid | 0.01 | EC | 20 | EMC | 75 | EA | 5 |
| Example 28 | 12 | 0.3 | 0.01 | 2 | DTD | 0.5 | Sulfamic acid | 0.01 | EC | 20 | EMC | 75 | EA | 5 |
| Example 29 | 12 | 0.01 | 0.01 | 2.5 | DTD | 0.5 | Sulfamic acid | 0.01 | EC | 20 | EMC | 75 | EA | 5 |
| Example 30 | 12 | 0.3 | 0.5 | 1 | DTD | 0.5 | Sulfamic acid | 0.01 | EC | 20 | EMC | 75 | EA | 5 |
| Example 31 | 12 | 0.2 | 0.05 | 2 | DTD | 0.5 | Sulfamic acid | 0.01 | PC | 20 | EMC | 75 | EA | 5 |
| Example 32 | 12 | 0.2 | 0.05 | 2 | DTD | 0.5 | Sulfamic acid | 0.01 | EC | 20 | DMC | 75 | EA | 5 |
| Example 33 | 12 | 0.2 | 0.05 | 2 | DTD | 0.5 | Sulfamic acid | 0.01 | EC | 20 | DEC | 75 | EA | 5 |
| Example 34 | 12 | 0.2 | 0.05 | 2 | DTD | 0.5 | Sulfamic acid | 0.01 | EC | 10 | EMC | 90 | / | / |
| Example 35 | 12 | 0.2 | 0.05 | 2 | DTD | 0.5 | Sulfamic acid | 0.01 | EC | 20 | EMC | 80 | / | / |
| Example 36 | 12 | 0.2 | 0.05 | 2 | DTD | 0.5 | Sulfamic acid | 0.01 | EC | 30 | EMC | 70 | / | / |
| Example 37 | 12 | 0.2 | 0.05 | 2 | / | / | / | / | EC | 20 | EMC | 75 | EA | 5 |
| Example 38 | 12 | 0.2 | 0.05 | 2 | DTD | 0.1 | Sulfamic acid | 0.01 | EC | 20 | EMC | 75 | EA | 5 |
| Example 39 | 12 | 0.2 | 0.05 | 2 | DTD | 0.2 | Sulfamic acid | 0.01 | EC | 20 | EMC | 75 | EA | 5 |
| Example 40 | 12 | 0.2 | 0.05 | 2 | DTD | 1 | Sulfamic acid | 0.01 | EC | 20 | EMC | 75 | EA | 5 |
| Example 41 | 12 | 0.2 | 0.05 | 2 | DTD | 2 | Sulfamic acid | 0.01 | EC | 20 | EMC | 75 | EA | 5 |
| Example 42 | 12 | 0.2 | 0.05 | 2 | VC | 0.5 | Sulfamic acid | 0.01 | EC | 20 | EMC | 75 | EA | 5 |
| Example 43 | 12 | 0.2 | 0.05 | 2 | PS | 0.5 | Sulfamic acid | 0.01 | EC | 20 | EMC | 75 | EA | 5 |
| Comparative Example 1 | 12 | / | / | / | / | / | / | / | EC | 20 | EMC | 75 | EA | 5 |
| Comparative Example 2 | LiPF₆=12% | | | / | / | / | / | / | EC | 20 | EMC | 75 | EA | 5 |
| Comparative Example 3 | LiPF₆+LiFSI=10%+2% | | | / | / | / | / | / | EC | 20 | EMC | 75 | EA | 5 |
| Comparative Example 4 | 12 | 0.2 | / | / | / | / | / | / | EC | 20 | EMC | 75 | EA | 5 |
| Comparative Example 5 | 12 | / | 0.05 | / | / | / | / | / | EC | 20 | EMC | 75 | EA | 5 |
| Comparative Example 6 | 12 | / | / | 2 | / | / | / | / | EC | 20 | EMC | 75 | EA | 5 |
| Comparative Example 7 | 12 | 0.2 | 0.05 | / | / | / | / | / | EC | 20 | EMC | 75 | EA | 5 |
| Comparative Example 8 | 12 | / | 0.05 | 2 | / | / | / | / | EC | 20 | EMC | 75 | EA | 5 |
| Comparative Example 9 | 12 | 0.2 | / | 2 | / | / | / | / | EC | 20 | EMC | 75 | EA | 5 |

**Table 2**

| No. | Al/A2 | A1/B1 | A2/A3 | (A2+A3)/B1 | C1/(C2+C3) | (A1+B2)/C1 | Capacity retention rate of secondary battery at 25°C after 600 cycles | Capacity retention rate of secondary battery at 45°C after 600 cycles | Initial DC internal resistance (mΩ) | Volume expansion rate of the secondary battery after 30 days of storage at 60°C | Hot box safety performance Tₘₐₓ |
|---|---|---|---|---|---|---|---|---|---|---|---|
| Example 1 | 1200 | 6.0 | 0.2 | 0.030 | 0.25 | 0.625 | 91.0% | 87.1% | 21.4 | 11.8% | 140°C |
| Example 2 | 600 | 6.0 | 0.4 | 0.035 | 0.25 | 0.625 | 91.3% | 87.4% | 21.0 | 11.5% | 140°C |
| Example 3 | 240 | 6.0 | 1.0 | 0.050 | 0.25 | 0.625 | 92.0% | 88.3% | 20.3 | 11.3% | 140°C |
| Example 4 | 120 | 6.0 | 2.0 | 0.075 | 0.25 | 0.625 | 92.3% | 88.7% | 20.1 | 10.7% | 140°C |
| Example 5 | 60 | 6.0 | 4.0 | 0.125 | 0.25 | 0.625 | 91.9% | 88.1% | 20.8 | 11.3% | 140°C |
| Example 6 | 40 | 6.0 | 6.0 | 0.175 | 0.25 | 0.625 | 91.5% | 87.3% | 21.2 | 11.5% | 140°C |
| Example 7 | 80 | 6.0 | 15 | 0.080 | 0.25 | 0.625 | 90.3% | 86.8% | 21.3 | 11.9% | 140°C |
| Example 8 | 80 | 6.0 | 10 | 0.083 | 0.25 | 0.625 | 91.5% | 87.2% | 20.9 | 11.3% | 140°C |
| Example 9 | 80 | 6.0 | 7.5 | 0.085 | 0.25 | 0.625 | 91.9% | 88.1% | 20.5 | 11.0% | 140°C |
| Example 10 | 80 | 6.0 | 3.0 | 0.100 | 0.25 | 0.625 | 92.1% | 88.5% | 20.1 | 10.8% | 140°C |
| Example 11 | 80 | 6.0 | 1.5 | 0.125 | 0.25 | 0.625 | 91.3% | 87.6% | 20.6 | 11.3% | 140°C |
| Example 12 | 80 | 6.0 | 0.75 | 0.175 | 0.25 | 0.625 | 90.5% | 86.1% | 21.3 | 12.3% | 140°C |
| Example 13 | 80 | 6.0 | 0.5 | 0.225 | 0.25 | 0.625 | 89.8% | 85.1% | 21.5 | 12.8% | 140°C |
| Example 14 | 80 | 6.0 | 0.3 | 0.325 | 0.25 | 0.625 | 88.9% | 85.0% | 21.7 | 13.1% | 140°C |
| Example 15 | 67 | 12.0 | 4.5 | 0.220 | 0.25 | 0.625 | 88.6% | 83.7% | 20.5 | 11.3% | 130°C |
| Example 16 | 67 | 8.0 | 4.5 | 0.147 | 0.25 | 0.625 | 89.1% | 84.3% | 21.0 | 12.3% | 135°C |
| Example 17 | 67 | 6.0 | 4.5 | 0.110 | 0.25 | 0.625 | 89.9% | 85.4% | 21.4 | 12.8% | 140°C |
| Example 18 | 67 | 4.8 | 4.5 | 0.088 | 0.25 | 0.625 | 89.1% | 84.7% | 21.9 | 13.1% | 135°C |
| Example 19 | 125 | 5.0 | 1.6 | 0.065 | 0.25 | 0.525 | 87.8% | 83.9% | 21.8 | 12.9% | 135°C |
| Example 20 | 110 | 5.5 | 2.0 | 0.075 | 0.25 | 0.575 | 88.1% | 83.5% | 21.4 | 13.1% | 140°C |
| Example 21 | 100 | 6.0 | 2.4 | 0.085 | 0.25 | 0.625 | 88.8% | 84.1% | 21.9 | 13.3% | 140°C |
| Example 22 | 93 | 6.5 | 2.8 | 0.095 | 0.25 | 0.675 | 88.2% | 83.7% | 22.3 | 13.9% | 135°C |
| Example 23 | 30 | 4.5 | 6.0 | 0.175 | 0.25 | 0.475 | 87.3% | 83.9% | 22.9 | 12.5% | 130°C |
| Example 24 | 1500 | 7.5 | 0.2 | 0.030 | 0.25 | 0.775 | 85.3% | 81.4% | 20.1 | 14.1% | 130°C |
| Example 25 | 90 | 3.6 | 2.0 | 0.060 | 0.25 | 0.475 | 85.2% | 81.9% | 23.7 | 13.5% | 135°C |
| Example 26 | 150 | 150 | 2.0 | 0.150 | 0.25 | 0.775 | 85.9% | 82.4% | 21.3 | 12.1% | 125°C |
| Example 27 | 1200 | 6.0 | 0.02 | 0.255 | 0.25 | 0.625 | 87.1% | 84.6% | 20.3 | 13.1% | 125°C |
| Example 28 | 40 | 6.0 | 30 | 0.155 | 0.25 | 0.625 | 86.9% | 83.4% | 22.3 | 11.5% | 135°C |
| Example 29 | 1200 | 4.8 | 1.0 | 0.008 | 0.25 | 0.625 | 86.3% | 82.8% | 22.5 | 11.7% | 135°C |
| Example 30 | 40 | 12.0 | 0.6 | 0.800 | 0.25 | 0.625 | 85.8% | 82.3% | 22.9 | 11.4% | 135°C |
| Example 31 | 60 | 6.0 | 4.0 | 0.125 | 0.25 | 0.625 | 90.9% | 87.1% | 21.8 | 12.3% | 135°C |
| Example 32 | 60 | 6.0 | 4.0 | 0.125 | 0.25 | 0.625 | 91.9% | 86.8% | 21.2 | 13.5% | 135°C |
| Example 33 | 60 | 6.0 | 4.0 | 0.125 | 0.25 | 0.625 | 91.6% | 86.9% | 22.3 | 11.5% | 135°C |
| Example 34 | 60 | 6.0 | 4.0 | 0.125 | 0.11 | 1.250 | 90.3% | 88.3% | 22.7 | 10.6% | 135°C |
| Example 35 | 60 | 6.0 | 4.0 | 0.125 | 0.25 | 0.625 | 91.2% | 87.3% | 21.9 | 11.3% | 135°C |
| Example 36 | 60 | 6.0 | 4.0 | 0.125 | 0.43 | 0.417 | 91.9% | 87.1% | 21.0 | 12.4% | 135°C |
| Example 37 | 60 | 6.0 | 4.0 | 0.125 | 0.25 | 0.600 | 90.1% | 86.5% | 21.5 | 12.1% | 140°C |
| Example 38 | 60 | 6.0 | 4.0 | 0.125 | 0.25 | 0.605 | 90.6% | 87.1% | 21.0 | 11.7% | 140°C |
| Example 39 | 60 | 6.0 | 4.0 | 0.125 | 0.25 | 0.610 | 91.0% | 87.6% | 20.9 | 11.5% | 140°C |
| Example 40 | 60 | 6.0 | 4.0 | 0.125 | 0.25 | 0.650 | 91.4% | 88.1% | 20.4 | 11.0% | 140°C |
| Example 41 | 60 | 6.0 | 4.0 | 0.125 | 0.25 | 0.700 | 90.8% | 87.7% | 20.9 | 11.9% | 140°C |
| Example 42 | 60 | 6.0 | 4.0 | 0.125 | 0.25 | 0.625 | 91.7% | 87.6% | 20.2 | 11.8% | 140°C |
| Example 43 | 60 | 6.0 | 4.0 | 0.125 | 0.25 | 0.625 | 91.2% | 87.5% | 21.0 | 11.0% | 140°C |
| Comparative Example 1 | / | / | / | / | 0.25 | / | 76.3% | 66.8% | 30.3 | 18.5% | 120°C |
| Comparative Example 2 | / | / | / | / | 0.25 | / | 77.5% | 67.5% | 27.9 | 23.3% | 110°C |
| Comparative Example 3 | / | / | / | / | 0.25 | / | 77.1% | 68.9% | 28.1 | 19.6% | 120°C |
| Comparative Example 4 | 60 | / | / | / | 0.25 | / | 78.4% | 70.4% | 28.3 | 17.9% | 120°C |
| Comparative Example 5 | / | / | / | / | 0.25 | / | 80.5% | 71.5% | 27.1 | 16.7% | 120°C |
| Comparative Example 6 | / | 6.0 | / | / | 0.25 | / | 79.5% | 70.6% | 26.3 | 17.3% | 130°C |
| Comparative Example 7 | 60 | / | 4.0 | / | 0.25 | / | 80.5% | 72.9% | 26.1 | 14.1% | 120°C |
| Comparative Example 8 | / | 6.0 | / | / | 0.25 | / | 82.1% | 73.9% | 25.9 | 13.9% | 130°C |
| Comparative Example 9 | 60 | 6.0 | / | / | 0.25 | / | 81.9% | 73.1% | 25.1 | 13.5% | 130°C |

Combining the test results of Comparative Examples 1 to 9 and Examples 1 to 43, it can be seen that by using lithium tetrafluoroborate, lithium difluoro(oxalate)borate and fluoroethylene carbonate in the non-aqueous electrolyte with lithium bis(fluorosulfonyl)imide as the main lithium salt, and reasonably adjusting the content A1 of lithium bis(fluorosulfonyl)imide, the content A2 of lithium tetrafluoroborate, the content A3 of lithium difluoro(oxalate)borate and the content B1 of fluoroethylene carbonate so that they meet A1/A2 of 30 to 1500, A1/B1 of 3.6 to 15 and A2/A3 of 0.02 to 30, it can make the secondary battery simultaneously have higher capacity retention, lower internal resistance, lower volume expansion and higher hot box safety performance.

As can be seen from the test results of Examples 37 to 41, it shown when the non-aqueous electrolyte further contained a second additive and/or a third additive, it helped to further enhance the overall performance of the secondary battery.

The inventors further investigated the effect of the thickness of the negative electrode plate on the performance of the secondary battery. The preparation of the positive electrode plate, the preparation of the negative electrode plate, the preparation of the non-aqueous electrolyte and the preparation of the secondary battery of Examples 44 to 47 were basically the same as Example 5, except that the thickness of the negative electrode plate was different.

**Table 3**

| No. | Conductivity of non-aqueous electrolyte (mS/cm) | Thickness of negative electrode plate (µm) | Capacity retention rate of secondary battery at 25°C after 600 cycles | Capacity retention rate of secondary battery at 45°C after 600 cycles | Initial DC internal resistance (mΩ) | Volume expansion rate of the secondary battery after 30 days of storage at 60°C | Hot box safety performance Tₘₐₓ |
|---|---|---|---|---|---|---|---|
| Example 5 | 10.0 | 120 | 91.9% | 88.1% | 20.8 | 11.3% | 140°C |
| Example 44 | 10.0 | 60 | 93.0% | 90.1% | 19.9 | 11.2% | 140°C |
| Example 45 | 10.0 | 80 | 92.1% | 88.9% | 20.3 | 11.5% | 140°C |
| Example 46 | 10.0 | 100 | 91.6% | 88.4% | 20.5 | 11.2% | 140°C |
| Example 47 | 10.0 | 150 | 91.1% | 87.3% | 22.1 | 11.7% | 140°C |

From the test results in Table 3, it was clear that when the conductivity x mS/cm of the non-aqueous electrolyte at room temperature and the thickness L µm of the negative electrode plate satisfied $L \leq 120 \times \sqrt{x / 8}$, it helped to further improve the comprehensive performance of the secondary battery.

## Claims

1. A non-aqueous electrolyte comprising an electrolyte salt, a non-aqueous solvent, and a first additive, a second additive and a third additive, wherein the electrolyte salt comprises:
lithium bis(fluorosulfonyl)imide, wherein based on the total mass of the non-aqueous electrolyte, lithium bis(fluorosulfonyl)imide is present in a mass content of A1;
lithium tetrafluoroborate, wherein based on the total mass of the non-aqueous electrolyte, lithium tetrafluoroborate is present in a mass content of A2; and
lithium difluoro(oxalate)borate, wherein based on the total mass of the non-aqueous electrolyte, lithium difluoro(oxalate)borate is present in a mass content of A3;
wherein the first additive comprises fluoroethylene carbonate, and wherein based on the total mass of the non-aqueous electrolyte, fluoroethylene carbonate is present in a mass content of B1;
wherein the second additive comprises at least one of vinylene carbonate, ethylene sulfate, 1,3-propanesultone,
wherein the third additive comprises at least one of sulfamic acid and a salt thereof; and
wherein the non-aqueous electrolyte satisfies that: A1 is from 9% to 15%, A1/A2 is from 30 to 1500, A1/B1 is from 3.6 to 15 and A2/A3 is from 0.02 to 30.

2. The non-aqueous electrolyte according to claim 1, wherein A1/A2 is from 50 to 250, optionally, A1/A2 is from 50 to 150; and/or
A1/B1 is from 4 to 9, optionally, A1/B1 is from 4 to 7; and/or
A2/A3 is from 0.5 to 13.5, optionally, A2/A3 is from 1 to 10.

3. The non-aqueous electrolyte according to claim 1 or 2, wherein the non-aqueous electrolyte further satisfies that: (A2+A3)/B1 is from 0.008 to 0.8, optionally, (A2+A3)/B1 is from 0.026 to 0.2.

4. The non-aqueous electrolyte according to any one of claims 1 to 3, wherein the non-aqueous electrolyte satisfies at least one of the following (1) to (4):
(1) A1 is from 10% to 15%, optionally from 10% to 13%;
(2) A2 is from 0.01% to 0.3%, optionally from 0.05% to 0.2%;
(3) A3 from 0.01% to 0.5% and optionally from 0.015% to 0.1%
(4) B1 is from 1.0% to 2.5%, optionally from 1.5% to 2.5%.

5. The non-aqueous electrolyte according to any one of claims 1 to 4, wherein non-aqueous solvent comprises:
a first solvent comprising at least one of ethylene carbonate, propylene carbonate and butylene carbonate, wherein the first solvent is present in a mass content of C1 in the non-aqueous solvent, based on the total mass of the non-aqueous solvent;
a second solvent comprising at least one of methyl ethyl carbonate, diethyl carbonate, dimethyl carbonate, dipropyl carbonate, methyl propyl carbonate and ethyl propyl carbonate, wherein the second solvent is present in a mass content of C2 in the non-aqueous solvent, based on the total mass of the non-aqueous solvent; and
a third solvent comprising at least one of methyl formate, methyl acetate, ethyl acetate, propyl acetate, methyl propionate, ethyl propionate, propyl propionate, methyl butyrate and ethyl butyrate, wherein the third solvent is present in a mass content of C3 in the non-aqueous solvent, based on the total mass of the non-aqueous solvent;
wherein the non-aqueous solvent satisfies that: C1 is from 10% to 30%, C2 is from 50% to 90% and C3 is from 0% to 20%;
optionally, C1/(C2+C3) is from 0.1 to 0.45, more optionally from 0.2 to 0.3.

6. The non-aqueous electrolyte according to any one of claims 1 to 5, wherein the second additive is present in a mass content of B2 in the non-aqueous electrolyte, based on the total mass of the non-aqueous electrolyte; and wherein B2 is from 0.05% to 2%, optionally from 0.5% to 2%.

7. The non-aqueous electrolyte according to claim 6, wherein (A1+B2)/C1 is from 0.4 to 1.3, optionally from 0.4 to 0.8.

8. The non-aqueous electrolyte according to any one of claims 1 to 7, wherein the third additive is present in a mass content of B3 in the non-aqueous electrolyte, based on the total mass of the non-aqueous electrolyte; and wherein B3 is from 0.005% to 0.1%, optionally from 0.005% to 0.05%.

9. A secondary battery (5) comprising a positive electrode plate, a negative electrode plate and a non-aqueous electrolyte, wherein the non-aqueous electrolyte is a non-aqueous electrolyte according to any one of claims 1-8.

10. The secondary battery (5) according to claim 9, wherein the non-aqueous electrolyte has a conductivity at room temperature of x mS/cm, the negative electrode plate has a thickness of L µm, and the secondary battery satisfies: $L \leq 120 \times \sqrt{x / 8}$.

11. The secondary battery (5) according to claim 9 or 10, wherein the positive electrode plate comprises a layered material with a molecular formula of LiₐNi_{b}Co_{c}Mn_{d}AlₑM_{f}O_{g}Aₕ, in which M represents a cation doped at transition metal site, A represents an anion doped at oxygen site, 0.8≤a≤1.2, 0≤b≤1, 0≤c≤1, 0≤d≤1, 0≤e≤1, 0≤f≤0.2 0≤g≤2, 0≤h≤2, b + c + d + e +f = 1, g +h = 2.

12. The secondary battery (5) according to claim 11, wherein LiₐNi_{b}Co_{c}Mn_{d}AlₑM_{f}O_{g}Aₕ satisfies at least one of the following (1) to (8):
(1) M is selected from at least one of Si, Ti, Mo, V, Ge, Se, Zr, Nb, Ru, Pd, Sb, Ce, Te, and W;
(2) A is selected from at least one of F, N, P, and S; optionally, A is selected from F;
(3) 0 <b< 0.98 and, optionally, 0.50 ≤b< 0.98;
(4) c = 0;
(5) 0<c≤0.20 and, optionally, 0 < c ≤ 0.10;
(6) d = 0 and 0 < e < 0.50, optionally, d = 0 and 0 < e ≤ 0.10;
(7) e = 0 and 0 < d < 0.50, optionally, e = 0 and 0 < d ≤ 0.10;
(8) 0 < d < 0.50 and 0 < e < 0.50, optionally, 0 < d ≤ 0.30 and 0 < e ≤ 0.10.

13. A battery module (4) comprising the secondary battery (5) according to any one of claims 9 to 12.

14. A battery pack (1), comprising one of the secondary battery (5) according to any one of claims 9 to 12 and the battery module (4) according to claim 13.

15. An electrical device comprising at least one of the secondary battery (5) according to any one of claims 9 to 12, the battery module (4) according to claim 13 and the battery pack (1) according to claim 14.

## Patentansprüche

1. Nichtwässriger Elektrolyt, umfassend ein Elektrolytsalz, ein nichtwässriges Lösungsmittel und einen ersten Zusatzstoff, einen zweiten Zusatzstoff und einen dritten Zusatzstoff, wobei das Elektrolytsalz umfasst:
Lithiumbis(fluorsulfonyl)imid, wobei, bezogen auf die Gesamtmasse des nichtwässrigen Elektrolyten, Lithiumbis(fluorsulfonyl)imid in einem Massengehalt von A1 vorliegt;
Lithiumtetrafluorborat, wobei, bezogen auf die Gesamtmasse des nichtwässrigen Elektrolyten, Lithiumtetrafluorborat in einem Massengehalt von A2 vorliegt; und
Lithiumdifluor(oxalato)borat, wobei, bezogen auf die Gesamtmasse des nichtwässrigen Elektrolyten, Lithiumdifluor(oxalato)borat in einem Massengehalt von A3 vorliegt;
wobei der erste Zusatzstoff Fluorethylencarbonat umfasst, und wobei, bezogen auf die Gesamtmasse des nichtwässrigen Elektrolyten, Fluorethylencarbonat in einem Massengehalt von B1 vorliegt;
wobei der zweite Zusatzstoff mindestens eines von Vinylencarbonat, Ethylensulfat, 1,3-Propansulton umfasst,
wobei der dritte Zusatzstoff mindestens eines von Sulfaminsäure und einem Salz davon umfasst; und
wobei der nichtwässrige Elektrolyt erfüllt, dass: A1 von 9 % bis 15 % beträgt, A1/A2 von 30 bis 1500 beträgt, A1/B1 von 3,6 bis 15 beträgt und A2/A3 von 0,02 bis 30 beträgt.

2. Nichtwässriger Elektrolyt nach Anspruch 1, wobei A1/A2 von 50 bis 250 beträgt, optional A1/A2 von 50 bis 150 beträgt; und/oder
A1/B1 von 4 bis 9 beträgt, optional A1/B1 von 4 bis 7 beträgt; und/oder
A2/A3 von 0,5 bis 13,5 beträgt, optional A2/A3 von 1 bis 10 beträgt.

3. Nichtwässriger Elektrolyt nach Anspruch 1 oder 2, wobei der nichtwässrige Elektrolyt ferner erfüllt, dass: (A2+A3)/B1 von 0,008 bis 0,8 beträgt, optional (A2+A3)/B1 von 0,026 bis 0,2 beträgt.

4. Nichtwässriger Elektrolyt nach einem der Ansprüche 1 bis 3, wobei der nichtwässrige Elektrolyt mindestens eines der folgenden (1) bis (4) erfüllt:
(1) A1 beträgt von 10 % bis 15 %, optional von 10 % bis 13 %;
(2) A2 beträgt von 0,01 % bis 0,3 %, optional von 0,05 % bis 0,2 %;
(3) A3 von 0,01 % bis 0,5 % und optional von 0,015 % bis 0,1 %;
(4) B1 beträgt von 1,0 % bis 2,5 %, optional von 1,5 % bis 2,5 %.

5. Nichtwässriger Elektrolyt nach einem der Ansprüche 1 bis 4, wobei das nichtwässrige Lösungsmittel umfasst:
ein erstes Lösungsmittel, das mindestens eines von Ethylencarbonat, Propylencarbonat und Butylencarbonat umfasst, wobei das erste Lösungsmittel in einem Massengehalt von C1 im nichtwässrigen Lösungsmittel vorliegt, bezogen auf die Gesamtmasse des nichtwässrigen Lösungsmittels;
ein zweites Lösungsmittel, das mindestens eines von Methylethylcarbonat, Diethylcarbonat, Dimethylcarbonat, Dipropylcarbonat, Methylpropylcarbonat und Ethylpropylcarbonat umfasst, wobei das zweite Lösungsmittel in einem Massengehalt von C2 im nichtwässrigen Lösungsmittel vorliegt, bezogen auf die Gesamtmasse des nichtwässrigen Lösungsmittels; und
ein drittes Lösungsmittel, das mindestens eines von Methylformiat, Methylacetat, Ethylacetat, Propylacetat, Methylpropionat, Ethylpropionat, Propylpropionat, Methylbutyrat und Ethylbutyrat umfasst, wobei das dritte Lösungsmittel in einem Massengehalt von C3 im nichtwässrigen Lösungsmittel vorliegt, bezogen auf die Gesamtmasse des nichtwässrigen Lösungsmittels;
wobei das nichtwässrige Lösungsmittel erfüllt, dass: C1 von 10 % bis 30 % beträgt, C2 von 50 % bis 90 % beträgt und C3 von 0 % bis 20 % beträgt;
optional C1/(C2+C3) von 0,1 bis 0,45 beträgt, weiter optional von 0,2 bis 0,3.

6. Nichtwässriger Elektrolyt nach einem der Ansprüche 1 bis 5, wobei der zweite Zusatzstoff in einem Massengehalt von B2 im nichtwässrigen Elektrolyten vorliegt, bezogen auf die Gesamtmasse des nichtwässrigen Elektrolyten; und wobei B2 von 0,05 % bis 2 % beträgt, optional von 0,5 % bis 2 %.

7. Nichtwässriger Elektrolyt nach Anspruch 6, wobei (A1+B2)/C1 von 0,4 bis 1,3 beträgt, optional von 0,4 bis 0,8.

8. Nichtwässriger Elektrolyt nach einem der Ansprüche 1 bis 7, wobei der dritte Zusatzstoff in einem Massengehalt von B3 im nichtwässrigen Elektrolyten vorliegt, bezogen auf die Gesamtmasse des nichtwässrigen Elektrolyten; und wobei B3 von 0,005 % bis 0,1 % beträgt, optional von 0,005 % bis 0,05 %.

9. Sekundärbatterie (5), umfassend eine positive Elektrodenplatte, eine negative Elektrodenplatte und einen nichtwässrigen Elektrolyten, wobei der nichtwässrige Elektrolyt ein nichtwässriger Elektrolyt nach einem der Ansprüche 1 bis 8 ist.

10. Sekundärbatterie (5) nach Anspruch 9, wobei der nichtwässrige Elektrolyt eine Leitfähigkeit bei Raumtemperatur von x mS/cm aufweist, die negative Elektrodenplatte eine Dicke von L µm aufweist, und die Sekundärbatterie erfüllt: L ≤ 120×.

11. Sekundärbatterie (5) nach Anspruch 9 oder 10, wobei die positive Elektrodenplatte ein Schichtmaterial mit einer Molekülformel von LiaNibCocMndAleMfOgAh umfasst, wobei M ein an einer Übergangsmetallstelle dotiertes Kation darstellt, A ein an einer Sauerstoffstelle dotiertes Anion darstellt, 0,8≤a≤1,2, 0≤b≤1, 0≤c≤1, 0≤d≤1, 0≤e≤1, 0≤f≤0,2, 0≤g≤2, 0≤h≤2, b + c + d + e + f = 1, g + h = 2.

12. Sekundärbatterie (5) nach Anspruch 11, wobei LiaNibCocMndAleMfOgAh mindestens eines der folgenden (1) bis (8) erfüllt:
(1) M ist ausgewählt aus mindestens einem von Si, Ti, Mo, V, Ge, Se, Zr, Nb, Ru, Pd, Sb, Ce, Te und W;
(2) A ist ausgewählt aus mindestens einem von F, N, P und S; optional ist A ausgewählt aus F;
(3) 0 < b < 0,98 und optional 0,50 ≤ b < 0,98;
(4) c = 0;
(5) 0 < c ≤ 0,20 und optional 0 < c ≤ 0,10;
(6) d = 0 und 0 < e < 0,50, optional d = 0 und 0 < e ≤ 0,10;
(7) e = 0 und 0 < d < 0,50, optional e = 0 und 0 < d ≤ 0,10;
(8) 0 < d < 0,50 und 0 < e < 0,50, optional 0 < d ≤ 0,30 und 0 < e ≤ 0,10.

13. Batteriemodul (4), umfassend die Sekundärbatterie (5) nach einem der Ansprüche 9 bis 12.

14. Batteriepack (1), umfassend eines von der Sekundärbatterie (5) nach einem der Ansprüche 9 bis 12 und dem Batteriemodul (4) nach Anspruch 13.

15. Elektrische Vorrichtung, umfassend mindestens eines von der Sekundärbatterie (5) nach einem der Ansprüche 9 bis 12, dem Batteriemodul (4) nach Anspruch 13 und dem Batteriepack (1) nach Anspruch 14.

## Revendications

1. Électrolyte non aqueux comprenant un sel d'électrolyte, un solvant non aqueux, et un premier additif, un deuxième additif et un troisième additif, dans lequel le sel d'électrolyte comprend :
du bis(fluorosulfonyl)imide de lithium, dans lequel, sur la base de la masse totale de l'électrolyte non aqueux, le bis(fluorosulfonyl)imide de lithium est présent en une teneur massique de A1 ;
du tétrafluoroborate de lithium, dans lequel, sur la base de la masse totale de l'électrolyte non aqueux, le tétrafluoroborate de lithium est présent en une teneur massique de A2 ; et
du difluoro(oxalato)borate de lithium, dans lequel, sur la base de la masse totale de l'électrolyte non aqueux, le difluoro(oxalato)borate de lithium est présent en une teneur massique de A3 ;
dans lequel le premier additif comprend du carbonate de fluoroéthylène, et dans lequel, sur la base de la masse totale de l'électrolyte non aqueux, le carbonate de fluoroéthylène est présent en une teneur massique de B1 ;
dans lequel le deuxième additif comprend au moins l'un parmi le carbonate de vinylène, le sulfate d'éthylène, le 1,3-propanesultone,
dans lequel le troisième additif comprend au moins l'un parmi l'acide sulfamique et un sel de celui-ci ; et
dans lequel l'électrolyte non aqueux satisfait à ce que : A1 est de 9 % à 15 %, A1/A2 est de 30 à 1500, A1/B1 est de 3,6 à 15 et A2/A3 est de 0,02 à 30.

2. Électrolyte non aqueux selon la revendication 1, dans lequel A1/A2 est de 50 à 250, éventuellement, A1/A2 est de 50 à 150 ; et/ou
A1/B1 est de 4 à 9, éventuellement, A1/B1 est de 4 à 7 ; et/ou
A2/A3 est de 0,5 à 13,5, éventuellement, A2/A3 est de 1 à 10.

3. Électrolyte non aqueux selon la revendication 1 ou 2, dans lequel l'électrolyte non aqueux satisfait en outre à ce que : (A2+A3)/B1 est de 0,008 à 0,8, éventuellement, (A2+A3)/B1 est de 0,026 à 0,2.

4. Électrolyte non aqueux selon l'une quelconque des revendications 1 à 3, dans lequel l'électrolyte non aqueux satisfait à au moins l'un des points suivants (1) à (4) :
(1) A1 est de 10 % à 15 %, éventuellement de 10 % à 13 % ;
(2) A2 est de 0,01 % à 0,3 %, éventuellement de 0,05 % à 0,2 % ;
(3) A3 de 0,01 % à 0,5 % et éventuellement de 0,015 % à 0,1 % ;
(4) B1 est de 1,0 % à 2,5 %, éventuellement de 1,5 % à 2,5 %.

5. Électrolyte non aqueux selon l'une quelconque des revendications 1 à 4, dans lequel le solvant non aqueux comprend :
un premier solvant comprenant au moins l'un parmi le carbonate d'éthylène, le carbonate de propylène et le carbonate de butylène, dans lequel le premier solvant est présent en une teneur massique de C1 dans le solvant non aqueux, sur la base de la masse totale du solvant non aqueux ;
un deuxième solvant comprenant au moins l'un parmi le carbonate de méthyle et d'éthyle, le carbonate de diéthyle, le carbonate de diméthyle, le carbonate de dipropyle, le carbonate de méthyle et de propyle et le carbonate d'éthyle et de propyle, dans lequel le deuxième solvant est présent en une teneur massique de C2 dans le solvant non aqueux, sur la base de la masse totale du solvant non aqueux ; et
un troisième solvant comprenant au moins l'un parmi le formiate de méthyle, l'acétate de méthyle, l'acétate d'éthyle, l'acétate de propyle, le propionate de méthyle, le propionate d'éthyle, le propionate de propyle, le butyrate de méthyle et le butyrate d'éthyle, dans lequel le troisième solvant est présent en une teneur massique de C3 dans le solvant non aqueux, sur la base de la masse totale du solvant non aqueux ;
dans lequel le solvant non aqueux satisfait à ce que : C1 est de 10 % à 30 %, C2 est de 50 % à 90 % et C3 est de 0 % à 20 % ;
éventuellement, C1/(C2+C3) est de 0,1 à 0,45, plus éventuellement de 0,2 à 0,3.

6. Électrolyte non aqueux selon l'une quelconque des revendications 1 à 5, dans lequel le deuxième additif est présent en une teneur massique de B2 dans l'électrolyte non aqueux, sur la base de la masse totale de l'électrolyte non aqueux ; et dans lequel B2 est de 0,05 % à 2 %, éventuellement de 0,5 % à 2 %.

7. Électrolyte non aqueux selon la revendication 6, dans lequel (A1+B2)/C1 est de 0,4 à 1,3, éventuellement de 0,4 à 0,8.

8. Électrolyte non aqueux selon l'une quelconque des revendications 1 à 7, dans lequel le troisième additif est présent en une teneur massique de B3 dans l'électrolyte non aqueux, sur la base de la masse totale de l'électrolyte non aqueux ; et dans lequel B3 est de 0,005 % à 0,1 %, éventuellement de 0,005 % à 0,05 %.

9. Batterie secondaire (5) comprenant une plaque d'électrode positive, une plaque d'électrode négative et un électrolyte non aqueux, dans lequel l'électrolyte non aqueux est un électrolyte non aqueux selon l'une quelconque des revendications 1 à 8.

10. Batterie secondaire (5) selon la revendication 9, dans laquelle l'électrolyte non aqueux a une conductivité à température ambiante de x mS/cm, la plaque d'électrode négative a une épaisseur de L µm, et la batterie secondaire satisfait à : L ≤ 120×.

11. Batterie secondaire (5) selon la revendication 9 ou 10, dans laquelle la plaque d'électrode positive comprend un matériau lamellaire ayant une formule moléculaire de LiaNibCocMndAleMfOgAh, dans laquelle M représente un cation dopé en un site de métal de transition, A représente un anion dopé en un site d'oxygène, 0,8≤a≤1,2, 0≤b≤1, 0≤c≤1, 0≤d≤1, 0≤e≤1, 0≤f≤0,2, 0≤g≤2, 0≤h≤2, b + c + d + e + f = 1, g + h = 2.

12. Batterie secondaire (5) selon la revendication 11, dans laquelle LiaNibCocMndAleMfOgAh satisfait à au moins l'un des points suivants (1) à (8) :
(1) M est choisi parmi au moins l'un de Si, Ti, Mo, V, Ge, Se, Zr, Nb, Ru, Pd, Sb, Ce, Te et W ;
(2) A est choisi parmi au moins l'un de F, N, P et S ; éventuellement, A est choisi parmi F ;
(3) 0 < b < 0,98 et, éventuellement, 0,50 ≤ b < 0,98 ;
(4) c = 0 ;
(5) 0 < c ≤ 0,20 et, éventuellement, 0 < c ≤ 0,10 ;
(6) d = 0 et 0 < e < 0,50, éventuellement, d = 0 et 0 < e ≤ 0,10 ;
(7) e = 0 et 0 < d < 0,50, éventuellement, e = 0 et 0 < d ≤ 0,10 ;
(8) 0 < d < 0,50 et 0 < e < 0,50, éventuellement, 0 < d ≤ 0,30 et 0 < e ≤ 0,10.

13. Module de batterie (4) comprenant la batterie secondaire (5) selon l'une quelconque des revendications 9 à 12.

14. Bloc-batterie (1), comprenant l'un parmi la batterie secondaire (5) selon l'une quelconque des revendications 9 à 12 et le module de batterie (4) selon la revendication 13.

15. Dispositif électrique comprenant au moins l'un parmi la batterie secondaire (5) selon l'une quelconque des revendications 9 à 12, le module de batterie (4) selon la revendication 13 et le bloc-batterie (1) selon la revendication 14.
